(19) Europäisches Patentamt
European Patent Office
Office européen des brevets

(11) EP 4 201 971 A1

(12) EUROPEAN PATENT APPLICATION
published in accordance with Art. 153(4) EPC

(43) Date of publication:
**28.06.2023 Bulletin 2023/26**

(21) Application number: **21858403.5**

(22) Date of filing: **20.08.2021**

(51) International Patent Classification (IPC):
***C08F 214/22*** *(2006.01)* ***C08L 27/16*** *(2006.01)*
***H01M 4/131*** *(2010.01)* ***H01M 4/62*** *(2006.01)*

(52) Cooperative Patent Classification (CPC):
**C08F 214/22; C08L 27/16; H01G 11/06; H01G 11/38; H01M 4/131; H01M 4/1391; H01M 4/62;** Y02E 60/10

(86) International application number:
**PCT/JP2021/030593**

(87) International publication number:
**WO 2022/039260 (24.02.2022 Gazette 2022/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2020 JP 2020139587**

(71) Applicant: **Daikin Industries, Ltd.**
**Osaka-shi, Osaka 530-0001 (JP)**

(72) Inventors:
- **TERADA, Junpei**
**Osaka-shi, Osaka 530-0001 (JP)**
- **ICHINOSE, Yuma**
**Osaka-shi, Osaka 530-0001 (JP)**
- **HOSODA, Chihiro**
**Osaka-shi, Osaka 530-0001 (JP)**
- **FURUTANI, Takahiro**
**Osaka-shi, Osaka 530-0001 (JP)**
- **YAMAZAKI, Shigeaki**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) BINDING AGENT FOR BATTERY, ELECTRODE MIXTURE, ELECTRODE, AND SECONDARY BATTERY

(57) Provided is a binder for a battery, comprising a fluorine-containing copolymer, wherein the fluorine-containing copolymer comprises a repeating unit (a) based on vinylidene fluoride and at least one repeating unit (b) selected from the group consisting of a repeating unit (b1) represented by a specific structural formula (b1) and a repeating unit (b2) represented by a structural formula (b2), and the fluorine-containing copolymer has a molar ratio of the repeating unit (a) to the repeating unit (b), (a)/(b), of 95/5 to 5/95.

EP 4 201 971 A1

## Description

TECHNICAL FIELD

The present disclosure relates to a binder for battery, an electrode mixture, an electrode, and a secondary battery.

BACKGROUND ART

Patent Document 1 discloses an electrode mixture slurry for a lithium secondary battery, comprising an electrode active material (A), a binder (B), and a fluoroelastomer particle (C), wherein the fluoroelastomer particle (C) is a crosslinked fluoroelastomer particle.

In addition, Patent Document 2 discloses, for example, a crosslinkable composition comprising vinylidene fluoride, a fluorine-containing monomer represented by the following general formula (1):

$$CH_2=CFRf \qquad (1)$$

wherein Rf is a linear or branched fluoroalkyl group having 1 to 12 carbon atoms
and an amorphous fluorine-containing elastomer that is a copolymer comprising vinylidene fluoride and a further monomer copolymerizable with the fluorine-containing monomer, wherein a molar ratio of vinylidene fluoride unit/fluorine-containing monomer unit is 85/15 to 20/80, the further monomer unit accounts for 0 to 50 mol% of all monomer units, a glass transition temperature is 25°C or less, and the amorphous fluorine-containing elastomer has at least one of an iodine atom and a bromine atom and a total content thereof is 0.001 to 10% by weight, and a cross-linking agent.

RELATED ART

PATENT DOCUMENTS

Patent Document 1: International Publication No. WO 2011/002097
Patent Document 2: Japanese Patent Laid-Open No. 2013-216915

SUMMARY OF THE INVENTION

PROBLEM TO BE SOLVED BY THE INVENTION

An object of the present disclosure is to provide a binder that has excellent gelation resistance, further can form an electrode material layer exhibiting sufficient adhesion, sufficient flexibility, and sufficient electrolytic solution resistance, and can easily form a high density electrode material layer.

MEANS FOR SOLVING THE PROBLEM

According to the present disclosure, provided is a binder for a battery, containing a fluorine-containing copolymer, wherein the fluorine-containing copolymer contains a repeating unit (a) based on vinylidene fluoride and at least one repeating unit (b) selected from the group consisting of a repeating unit (b1) represented by a general formula (b1) and a repeating unit (b2) represented by a general formula (b2), and the fluorine-containing copolymer has a molar ratio of the repeating unit (a) to the repeating unit (b), (a)/(b), of 95/5 to 5/95.

General formula (b1):

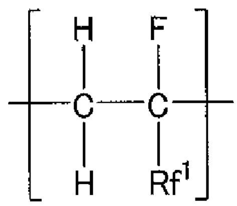

wherein $Rf^1$ is a linear or branched fluorinated alkyl group or fluorinated alkoxy group having 1 to 12 carbon atoms, and, when the number of carbon atoms is 2 or more, optionally includes an oxygen atom between carbon atoms thereof.

General formula (b2):

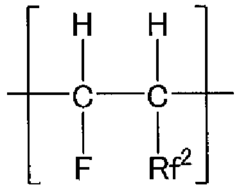

wherein $Rf^2$ is a linear or branched fluorinated alkyl group or fluorinated alkoxy group having 1 to 12 carbon atoms, and, when the number of carbon atoms is 2 or more, optionally includes an oxygen atom between carbon atoms thereof.

In the binder for a battery according to the present disclosure, the molar ratio of the repeating unit (a) to the repeating unit (b), (a)/(b), in the fluorine-containing copolymer is preferably 87/13 to 20/80.

In the binder for a battery according to the present disclosure, the glass transition temperature of the fluorine-containing copolymer is preferably 25°C or less.

The binder for a battery according to the present disclosure preferably further contains a polyvinylidene fluoride.

In the binder for a battery according to the present disclosure, the mass ratio of the fluorine-containing copolymer to the polyvinylidene fluoride, fluorine-containing copolymer/polyvinylidene fluoride, is preferably 99/1 to 1/99.

In addition, according to the present disclosure, provided is an electrode mixture containing the above binder for battery, a powder electrode material, and water or a non-aqueous solvent.

In the electrode mixture of the present disclosure, the powder electrode material preferably contains a lithium transition metal composite oxide.

Preferably, the electrode mixture of the present disclosure contains the non-aqueous solvent, and the non-aqueous solvent contains N-methyl-2-pyrrolidone.

In addition, according to the present disclosure, an electrode including an electrode material layer containing the above binder for a battery is provided.

In addition, according to the present disclosure, an electrode including an electrode material layer formed of the above electrode mixture is provided.

In addition, according to the present disclosure, a secondary battery including the above electrode is provided.

## EFFECTS OF INVENTION

According to the present disclosure, it is possible to provide a binder that has excellent gelation resistance, further can form an electrode material layer exhibiting sufficient adhesion, sufficient flexibility, and sufficient electrolytic solution resistance, and can easily form a high density electrode material layer.

## DESCRIPTION OF EMBODIMENTS

Hereinafter, specific embodiments of the present disclosure will be described in detail, but the present disclosure is not limited to the following embodiments.

The binder for a battery according to the present disclosure contains a fluorine-containing copolymer containing a repeating unit (a) based on vinylidene fluoride and at least one repeating unit (b) selected from the group consisting of a repeating unit (b1) and a repeating unit (b2), and having a molar ratio of the repeating unit (a) to the repeating unit (b), (a)/(b), of 95/5 to 5/95.

As described above, the binder for a battery according to the present disclosure contains a repeating unit (a)

having a specific structure and a repeating unit (b) having a specific structure at an extremely limited molar ratio.

A binder is used to create an electrode of a battery such as a secondary battery or a capacitor by binding a powder electrode material and adhering the powder electrode material and a current collector to each other. The binder is usually used as a component of an electrode mixture containing a powder electrode material and water or a non-aqueous solvent. By applying the electrode mixture to a current collector, an electrode including an electrode material layer and the current collector can be created. If the electrode material layer obtained is inflexible, the following problem occurs when the electrode is bent or the electrode is wound: the powder electrode material is peeled from the current collector or the electrode material layer is cracked.

Because of this, Patent Document 1 proposes use of a crosslinked fluoroelastomer particle in addition to a binder. However, this has the following problems: when a positive electrode mixture containing, for example, a crosslinked fluoroelastomer particle such as a crosslinked VdF/HFP copolymer elastomer particle or a crosslinked TFE/VdF/HFP copolymer elastomer, and a powder electrode material such as a positive electrode active material having a high nickel content is prepared, a component in the positive electrode mixture is settled, which makes it difficult to uniformly apply the positive electrode mixture and makes the adhesion between the positive electrode material layer obtained and the current collector poor.

Because the binder for a battery according to the present disclosure contains a repeating unit (a) having a specific structure and a repeating unit (b) having a specific structure at an extremely limited molar ratio, the binder for a battery has excellent gelation resistance, further can form an electrode material layer exhibiting sufficient adhesion, sufficient flexibility, and sufficient electrolytic solution resistance, and can easily form a high density electrode material layer.

Gelation resistance means the following property: the viscosity of an electrode mixture containing a binder for a battery is unlikely to increase. For example, even when a positive electrode mixture is prepared by mixing the binder for a battery according to the present disclosure with a positive electrode active material having a high nickel content, the positive electrode mixture obtained is unlikely to increase in viscosity and has superior gelation resistance to a conventional positive electrode mixture. By using the binder for a battery according to the present disclosure, a homogeneous and smooth electrode material layer can be easily formed.

The adhesion of a binder for a battery refers to the adhesion between a current collector (metal foil) and an electrode material layer when an electrode mixture is prepared using the binder for a battery and the electrode material layer is formed on the current collector (metal foil) using the electrode mixture. For example, the electrode material layer obtained by using the binder for a battery according to the present disclosure has sufficient adhesion as compared with a conventional electrode material layer.

The flexibility of a binder for a battery refers to the flexibility of an electrode material layer when an electrode mixture is prepared using the binder for a battery and the electrode material layer is formed using the electrode mixture. For example, the electrode material layer obtained by using the binder for a battery according to the present disclosure has sufficient flexibility as compared with a conventional electrode material layer.

The flexibility of the electrode material layer can be evaluated by a bending test of an electrode and a test to wind an electrode around a round bar. An electrode including the electrode material layer obtained by using the binder for a battery according to the present disclosure has a small maximum test force as measured by a bending test. That is, a large force is not required to bend the electrode, and breakage due to bending stress is unlikely to occur when the electrode is bent or wound, and thus the electrode can be easily changed to a desired shape. Further, the electrode including the electrode material layer obtained by using the binder for a battery according to the present disclosure is unlikely to cause a pinhole in the electrode material layer even when wound around a round bar having a small diameter. That is, the electrode is also unlikely to cause a pinhole in the electrode material layer even when used in a wound type battery having a small electrode bending radius. As described above, the electrode material layer obtained by using the binder for a battery according to the present disclosure has excellent flexibility, can be easily bent or wound, and is unlikely to be broken or cause a pinhole.

Further, by using the binder for a battery according to the present disclosure, it is possible to form an electrode material layer that is unlikely to cause springback. When the electrode material layer is formed, pressworking is carried out in order to make the electrode thin and flat and to improve the electrode density, and heat treatment may be carried out after the pressworking. Springback refers to a phenomenon in which the electrode thickness increases or the electrode density decreases after the press load due to pressworking is released and heat treatment is carried out. When the coating film obtained by using the binder for a battery according to the present disclosure is pressed at high pressure and heat-treated to form an electrode material layer, the increase in film thickness after the heat treatment is small and the density is unlikely to decrease. Therefore, by using the binder for a battery according to the present disclosure, a high density electrode material layer can be easily formed.

Further, the electrode material layer obtained by using the binder for a battery according to the present disclosure is unlikely to swell even when immersed in an electrolytic solution, and has sufficient electrolytic solution resistance as compared with a conventional electrode material layer.

As described above, the binder for a battery according to the present disclosure has excellent gelation resistance, further can form an electrode material layer exhibiting sufficient adhesion, sufficient flexibility, and sufficient electrolytic solution resistance, and can easily form a high density electrode material layer. Therefore, by using the binder for a battery according to the present disclosure, a battery having a sufficiently small initial resistance and resistance increase rate and a sufficiently large initial discharge capacity and cycle capacity retention rate as compared with a conventional battery can be created.

The repeating unit (b1) is a repeating unit represented by the general formula (b1).

General formula (b1):

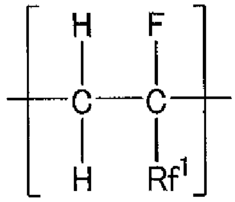

In the general formula (b1), $Rf^1$ is a linear or branched fluorinated alkyl group having 1 to 12 carbon atoms or a linear or branched fluorinated alkoxy group having 1 to 12 carbon atoms. The fluorinated alkyl group and the fluorinated alkoxy group can each include an oxygen atom (-O-) between carbon atoms thereof when the number of carbon atoms is 2 or more.

The fluorinated alkyl group of $Rf^1$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^1$ may have a hydrogen atom replaced by a substituent other than a fluorine atom, and preferably does not include a substituent other than a fluorine atom.

The fluorinated alkoxy group of $Rf^1$ may be a partially fluorinated alkoxy group in which a part of the hydrogen atoms bonded to the carbon atoms is replaced by a fluorine atom in some embodiments, and may be a perfluorinated alkoxy group in which all of the hydrogen atoms bonded to the carbon atoms are replaced by fluorine atoms in other embodiments. In addition, the fluorinated alkoxy group of $Rf^1$ may have a hydrogen atom replaced by a substituent other than a fluorine atom, and preferably does not include a substituent other than a fluorine atom.

The number of carbon atoms of $Rf^1$ is preferably 1 to 10, more preferably 1 to 6, further preferably 1 to 4, and particularly preferably 1.

$Rf^1$ is preferably a group represented by the general formula:

$$-(Rf^{11})_m-(O)_p-(Rf^{12}-O)_n-Rf^{13}$$

wherein $Rf^{11}$ and $Rf^{12}$ are each independently a linear or branched fluorinated alkylene group having 1 to 4 carbon atoms, $Rf^{13}$ is a linear or branched fluorinated alkyl group having 1 to 4 carbon atoms, p is 0 or 1, m is an integer of 0 to 4, and n is an integer of 0 to 4.

The fluorinated alkylene group of each of $Rf^{11}$ and $Rf^{12}$ may be a partially fluorinated alkylene group in which a part of the hydrogen atoms bonded to the carbon atoms is replaced by a fluorine atom in some embodiments, and may be a perfluorinated alkylene group in which all of the hydrogen atoms bonded to the carbon atoms are replaced by fluorine atoms in other embodiments. In addition, the fluorinated alkylene group of each of $Rf^{11}$ and $Rf^{12}$ may have a hydrogen atom replaced by a substituent other than a fluorine atom, and preferably does not include a substituent other than a fluorine atom. $Rf^{11}$ and $Rf^{12}$ may each, at each occurrence, be the same or different.

Examples of the fluorinated alkylene group of $Rf^{11}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 2 carbon atoms is preferable, and $-CF_2-$ is more preferable.

Examples of the fluorinated alkylene group of $Rf^{12}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 3 carbon atoms is preferable, and $-CF_2-$, $-CF_2CF_2-$, $-CF_2-CF_2-CF_2-$, $-CF(CF_3)-CF_2-$, or $-CF_2-CF(CF_3)-$ is more preferable.

The fluorinated alkyl group of $Rf^{13}$ may be a partially fluorinated alkyl group in which a part of the hydrogen

atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^{13}$ may have a hydrogen atom replaced by a substituent other than a fluorine atom, and preferably does not include a substituent other than a fluorine atom (for example, a reactive functional group such as -CN, -I, or -Br).

Examples of the fluorinated alkyl group of $Rf^{13}$ include $-CH_2F$, $-CHF_2$, $-CF_3$, $-CH_2-CH_2F$, $-CH_2-CHF_2$, $-CH_2-CF_3$, $-CHF-CH_2F$, $-CHF-CHF_2$, $-CHF-CF_3$, $-CF_2-CH_2F$, $-CF_2-CHF_2$, $-CF_2-CF_3$, $-CH_2-CF_2-CH_2F$, $-CHF-CF_2-CH_2F$, $-CF_2-CF_2-CH_2F$, $-CF(CF_3)-CH_2F$, $-CH_2-CF_2-CHF_2$, $-CHF-CF_2-CHF_2$, $-CF_2-CF_2-CHF_2$, $-CF(CF_3)-CHF_2$, $-CH_2-CF_2-CF_3$, $-CHF-CF_2-CF_3$, $-CF_2-CF_2-CF_3$, $-CF(CF_3)-CF_3$, $-CH_2-CF_2-CF_2-CF_3$, $-CHF-CF_2-CF_2-CF_3$, $-CF_2-CF_2-CF_2-CF_3$, $-CH(CF_3)-CF_2-CF_3$, $-CF(CF_3)-CF_2-CF_3$, and $-C(CF_3)_2-CF_3$, and among these, $-CF_3$, $-CHF-CF_3$, $-CF_2-CHF_2$, $-CF_2-CF_3$, $-CF_2-CF_2-CF_3$, $-CF(CF_3)-CF_3$, $-CF_2-CF_2-CF_2-CF_3$, $-CH(CF_3)-CF_2-CF_3$, or $-CF(CF_3)-CF_2-CF_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit (b1) is

preferably

$-CH_2-CF[-CF_3]-$,

$-CH_2-CF[-CF_2CF_3]-$,

$-CH_2-CF[-CF_2CF_2CF_3]-$,

$-CH_2-CF[-CF_2CF_2CF_2CF_3]-$,

$-CH_2-CF[-CF_2-O-CF(CF_3)-CF_2-O-CHF-CF_3]-$,

$-CH_2-CF[-CF_2-O-CF(CF_3)-CF_2-O-CF_2-CF_3]-$,

$-CH_2-CF[-CF_2-O-CF(CF_3)-CF_2-O-CF(CF_3)-CF_3]-$,

$-CH_2-CF[-CF_2-O-CF(CF_3)-CF_2-O-CH(CF_3)-CF_2-CF_3]-$,

$-CH_2-CF[-CF_2-O-CF(CF_3)-CF_2-O-CF(CF_3)-CF_2-CF_3]-$,

$-CH_2-CF[-OCF_2OCF_3]-$,

$-CH_2-CF[-OCF_2CF_2CF_2OCF_3]-$,

$-CH_2-CF[-CF_2OCF_2OCF_3]-$,

$-CH_2-CF[-CF_2OCF_2CF_2CF_2OCF_3]-$,

or

$-CH_2-CF[-O-CF_2-CF_3]-$,

and
more preferably

$-CH_2-CF[-CF_3]-$

or

$-CH_2-CF[-CF_2-O-CF(CF_3)-CF_2-O-CHF-CF_3]-$.

The repeating unit (b2) is a repeating unit represented by the general formula (b2).

General formula (b2):

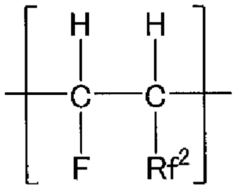

In the general formula (b2), $Rf^2$ is a linear or branched fluorinated alkyl group having 1 to 12 carbon atoms or a linear or branched fluorinated alkoxy group having 1 to 12 carbon atoms. The fluorinated alkyl group and the fluorinated alkoxy group can each include an oxygen atom (-O-) between carbon atoms thereof when the number of carbon atoms is 2 or more.

The fluorinated alkyl group of $Rf^2$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^2$ may have a hydrogen atom replaced by a substituent other than a fluorine atom, and preferably does not include a substituent other than a fluorine atom.

The fluorinated alkoxy group of $Rf^2$ may be a partially fluorinated alkoxy group in which a part of the hydrogen atoms bonded to the carbon atoms is replaced by a fluorine atom in some embodiments, and may be a perfluorinated alkoxy group in which all of the hydrogen atoms bonded to the carbon atoms are replaced by fluorine atoms in other embodiments. In addition, the fluorinated alkoxy group of $Rf^2$ may have a hydrogen atom replaced by a substituent other than a fluorine atom, and preferably does not include a substituent other than a fluorine atom.

The number of carbon atoms of $Rf^2$ is preferably 1 to 10, more preferably 1 to 6, further preferably 1 to 4, and particularly preferably 1.

$Rf^2$ is preferably a group represented by the general formula:

$$-(Rf^{21})_m-(O)_p-(Rf^{22}-O)_n-Rf^{23}$$

wherein $Rf^{21}$ and $Rf^{22}$ are each independently a linear or branched fluorinated alkylene group having 1 to 4 carbon atoms, $Rf^{23}$ is a linear or branched fluorinated alkyl group having 1 to 4 carbon atoms, p is 0 or 1, m is an integer of 0 to 4, and n is an integer of 0 to 4.

The fluorinated alkylene group of each of $Rf^{21}$ and $Rf^{22}$ may be a partially fluorinated alkylene group in which a part of the hydrogen atoms bonded to the carbon atoms is replaced by a fluorine atom in some embodiments, and may be a perfluorinated alkylene group in which all of the hydrogen atoms bonded to the carbon atoms are replaced by fluorine atoms in other embodiments. In addition, the fluorinated alkylene group of each of $Rf^{21}$ and $Rf^{22}$ may have a hydrogen atom replaced by a substituent other than a fluorine atom, and preferably does not include a substituent other than a fluorine atom. $Rf^{21}$ and $Rf^{22}$ may each, at each occurrence, be the same or different.

Examples of the fluorinated alkylene group of $Rf^{21}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 2 carbon atoms is preferable, and $-CF_2-$ is more preferable.

Examples of the fluorinated alkylene group of $Rf^{22}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 3 carbon atoms is preferable, and $-CF_2-$, $-CF_2CF_2-$, $-CF_2-CF_2-CF_2-$, $-CF(CF_3)-CF_2-$, or $-CF_2-CF(CF_3)-$ is more preferable.

The fluorinated alkyl group of $Rf^{23}$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^{23}$ may have a hydrogen atom replaced by a substituent other than a fluorine atom, and preferably does not include a substituent other than a fluorine atom (for example, a reactive functional group such as -CN, -I, or -Br).

Examples of the fluorinated alkyl group of $Rf^{23}$ include $-CH_2F$, $-CHF_2$, $-CF_3$, $-CH_2-CH_2F$, $-CH_2-CHF_2$, $-CH_2-CF_3$, $-CHF-CH_2F$, $-CHF-CHF_2$, $-CHF-CF_3$, $-CF_2-CH_2F$, $-CF_2-CHF_2$, $-CF_2-CF_3$, $-CH_2-CF_2-CH_2F$, $-CHF-CF_2-CH_2F$, $-CF_2-CF_2-CH_2F$, $-CF(CF_3)-CH_2F$, $-CH_2-CF_2-CHF_2$, $-CHF-CF_2-CHF_2$, $-CF_2-CF_2-CHF_2$, $-CF(CF_3)-CHF_2$, $-CH_2-CF_2-CF_3$, $-CHF-CF_2-CF_3$, $-CF_2-CF_2-CF_3$, $-CF(CF_3)-CF_3$, $-CH_2-CF_2-CF_2-CF_3$, $-CHF-CF_2-CF_2-CF_3$, $-CF_2-CF_2-CF_2-CF_3$, $-CH(CF_3)-CF_2-CF_3$, $-CF(CF_3)-CF_2-CF_3$, and $-C(CF_3)_2-CF_3$, and among these, $-CF_3$, $-CHF-CF_3$, $-CF_2-CHF_2$, $-CF_2-CF_3$, $-CF_2-CF_2-CF_3$, $-CF(CF_3)-CF_3$, $-CF_2-CF_2-CF_2-CF_3$, $-CH(CF_3)-CF_2-CF_3$, or $-CF(CF_3)-CF_2-CF_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit (b2) is

preferably

$-CHF-CH[-CF_3]-$,

$-CHF-CH[-CF_2CF_3]-$,

$-CHF-CH[-CF_2CF_2CF_3]-$,

or

$-CHF-CH[-CF_2CF_2CF_2CF_3]-$,

and
more preferably

$-CHF-CH[-CF_3]-$.

The fluorine-containing copolymer may further contain a repeating unit based on a further monomer other than the repeating units (a) and (b). The further monomer is not limited as long as it is a monomer copolymerizable with the monomers forming the repeating units (a) and (b), and one or two or more monomers may be used.

The further monomer is preferably at least one selected from the group consisting of tetrafluoroethylene [TFE], hexafluoropropylene [HEP], perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, propylene, alkyl vinyl ether, and a monomer having a reactive functional group, more preferably at least one selected from the group consisting of TFE, hexafluoropropylene, and perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, alkyl vinyl ether, and a monomer having a reactive functional group, and further preferably TFE. In addition, it is also one of the preferable embodiments to use only TFE as the further monomer.

Examples of the reactive functional group include a cyano group, a carboxyl group, an alkoxycarbonyl group, I, Br, $-CH_2OH$, and a carbon-carbon double bond.

Examples of the monomer having a reactive functional group include

an iodine or bromine-containing monomer represented by
general formula (2) : $CX^3_2=CX^3-Rf^3CHR^1X^4$
wherein $X^3$ is the same or different and is H, F, or $-CH_3$, $Rf^3$ is a fluoroalkylene group, a perfluoroalkylene group, a fluoro(poly)oxyalkylene group, or a perfluoro (poly) oxyalkylene group, $R^1$ is H or $-CH_3$, and $X^4$ is I or Br;
an iodine or bromine-containing monomer represented by
general formula (3) : $CX^5_2=CX^5-Rf^4X^6$
wherein $X^5$ is the same or different and is H, F, or $-CH_3$, $Rf^4$ is a fluoroalkylene group, a perfluoroalkylene group, a fluoro(poly)oxyalkylene group, or a perfluoro (poly) oxyalkylene group, and $X^6$ is I or Br (preferably, an iodine-containing monomer represented by the general formula: $CH_2=CH(CF_2)_nI$ wherein n is an integer of 2 to 8) ;
a monomer represented by
general formula (4): $CF_2=CFO(CF2CF(CF3)O)_m(CF_2)_n-X^7$
wherein m is an integer of 0 to 5, n is an integer of 1 to 3, and $X^7$ is a cyano group, a carboxyl group, an alkoxycarbonyl

group, I, or Br;
a monomer represented by
general formula (5): $CH_2=CFCF_2O(CF(CF_3)CF_2O)_m(CF(CF_3))_n-X^8$
wherein m is an integer of 0 to 5, n is an integer of 1 to 3, and $X^8$ is a cyano group, a carboxyl group, an alkoxycarbonyl group, I, Br, or $-CH_2OH$; and
a monomer represented by
general formula (6) : $CR^2R^3=CR^4-Z-CR^5=CR^6R^7$
wherein $R^2$ to $R^7$ are the same or different and are each H or an alkyl group having 1 to 5 carbon atoms, and Z is a alkylene group having 1 to 18 carbon atoms, a cycloalkylene group having 3 to 18 carbon atoms, an alkylene or oxyalkylene group having carbon atoms of 1 to 10 carbon atoms at least partially fluorinated, each of which is linear or branched and may have an oxygen atom, or a (per)fluoropolyoxyalkylene group represented by

$$-(Q)_p-CF_2O-(CF_2CF_2O)_m(CF_2O)_n-CF_2-(Q)_p-$$

wherein Q is an alkylene or an oxyalkylene group, P is 0 or 1, and m/n is 0.2 to 5, and having a molecular weight of 500 to 10,000.

Examples of the monomer represented by the general formula (6) include $CH_2=CH-(CF_2)_2-CH=CH_2$, $CH_2=CH-(CF_2)_4-CH=CH_2$, $CH_2=CH-(CF_2)_6-CH=CH_2$, and a monomer represented by the general formula: $CH_2=CH-Z^1-CH=CH_2$ wherein $Z^1$ is a fluoropolyoxyalkylene group represented by $-CH_2OCH_2-CF_2O-(CF_2CF_2O)_{m1}(CF_2O)_{n1}-CF_2-CH_2OCH_2-$, m1/n1 is 0.5, and the molecular weight is 2,000.

The monomer having a reactive functional group is, among these, preferably at least one selected from the group consisting of $CF_2=CFOCF_2CF(CF_3)\ OCF_2CF_2CN$, $CF_2=CFOCF_2CF(CF_3)\ OCF_2CF_2COOH$, $CF_2=CFOCF_2CF_2CH_2I$, $CF_2=CFOCF_2CF(CF_3)\ OCF_2CF_2CH_2I$, $CH_2=CFCF_2OCF(CF_3)\ CF_2OCF(CF_3)\ CN$, $CH_2=CFCF_2OCF(CF_3)CF_2OCF(CF_3)COOH$, and $CH_2=CFCF_2OCF(CF_3)CF_2OCF(CF_3)CH_2OH$.

The fluorine-containing copolymer may contain a repeating unit based on a monomer having a reactive functional group. In this case, a crosslinked structure can be formed by reacting reactive functional groups with each other or by reacting a reactive functional group with a crosslinking agent. However, in one embodiment of the binder for a battery according to the present disclosure, the fluorine-containing copolymer does not contain a repeating unit based on a monomer having a reactive functional group. In one embodiment of the binder for a battery according to the present disclosure, no crosslinking agent is contained.

The content of the repeating unit based on a further monomer is preferably 0 to 50 mol% and more preferably 0 to 40 mol%, based on all repeating units constituting the fluorine-containing copolymer. In some embodiments, the content of the repeating unit based on a further monomer may be 0 mol%.

The molar ratio of the repeating unit (a) to the repeating unit (b), (a)/(b), in the fluorine-containing copolymer is 95/5 to 5/95, and is preferably 87/13 or less, more preferably 78/22 or less, and preferably 20/80 or more, more preferably 22/78 or more, further preferably 50/50 or more, particularly preferably 60/40 or more, from the viewpoint of obtaining a binder having superior gelation resistance, being able to form an electrode material layer having superior adhesion, flexibility, and electrolytic solution resistance, and being able to easily form a higher density electrode material layer.

In the present disclosure, the content of each repeating unit is a value measured by an NMR method.

The fluorine-containing copolymer is preferably a copolymer consisting only of the repeating units (a) and (b) from the viewpoint of obtaining a binder having superior gelation resistance, and being able to form an electrode material layer having superior adhesion, flexibility, and electrolytic solution resistance, and being able to easily form a higher density electrode material layer.

In addition, the fluorine-containing copolymer is preferably a copolymer having neither an iodine atom nor a bromine atom from the viewpoint of far superior battery characteristics.

The glass transition temperature of the fluorine-containing copolymer is preferably 25°C or less, more preferably 0°C or less, further preferably -5°C or less, and particularly preferably -10°C or less. Further, the glass transition temperature of the fluorine-containing copolymer can also be -20°C or less. When the glass transition temperature of the fluorine-containing copolymer is within the above range, an electrode material layer having far superior flexibility can be formed. The fluorine-containing copolymer is preferably a fluorine-containing elastomer and preferably an amorphous polymer, from the viewpoint of being able to form an electrode material layer having far superior flexibility.

In the present disclosure, "amorphous" means that the magnitude of a melting peak ($\Delta H$) that appears in a DSC measurement (temperature-increasing rate of 20°C/min) is 2.0 J/g or less.

The glass transition temperature is determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC

curve and the tangent line at an inflection point of the DSC curve as the glass transition temperature.

The number average molecular weight (Mn) of the fluorine-containing copolymer is preferably 7,000 to 500,000, the weight average molecular weight (Mw) of the fluorine-containing copolymer is preferably 10,000 to 3,000,000, and Mw/Mn of the fluorine-containing copolymer is preferably 1.3 to 4.0. The number average molecular weight (Mn), the weight average molecular weight (Mw), and Mw/Mn are values measured by a GPC method.

The Mooney viscosity of the fluorine-containing copolymer at 121°C, ML1 + 10 (121°C), is preferably 2 or more, more preferably 5 or more, further preferably 10 or more, and particularly preferably 30 or more, and in some embodiments, may be 200 or less.

The Mooney viscosity of the fluorine-containing copolymer at 140°C, ML1 + 10 (121°C), is preferably 2 or more, more preferably 5 or more, further preferably 10 or more, and particularly preferably 30 or more, and in some embodiments, may be 200 or less.

The Mooney viscosity is a value measured according to ASTM-D1646-15 and JIS K6300-1:2013.

For the fluorine-containing copolymer, the terminal structure preferably satisfies the following inequality:

$$0.01 \leq ([-CH_2OH] + [-COOH])/([-CH_3] + [-CF_2H] + [-CH_2OH] + [-CH_2I] + [-OC(O)R_H] + [-COOH]) \leq 0.25$$

wherein $R_H$ is an alkyl group having 1 to 20 carbon atoms. When the terminal functional group satisfies the above expression, good adhesion and flexibility are provided, and the binder has an excellent function.

In addition, satisfying the above general formula does not mean that the fluorine-containing copolymer has all the functional groups of [$-CH_3$], [$-CF_2H$], [$-CH_2OH$], [$-CH_2I$], [$-OC(O)R_H$], and [-COOH], but means that and the ratio of the numbers of the terminal groups present in the fluorine-containing copolymer among these functional groups is within the above range.

The abundance of each terminal group of the fluorine-containing copolymer can be measured by analysis by NMR.

For example, NMR terminal group analysis is carried out by a proton solution NMR method. An analytical sample is adjusted to be a 20% by mass solution using Acetone-d6 as a solvent, and the measurement is carried out.

The reference peak is the peak top of acetone at 2.05 ppm.

Measuring apparatus: VNMRS400 manufactured by Varian, Inc.

Resonance frequency: 399.74 (Sfrq)
Pulse width: 45°

The terminals are associated with the following respective peak positions.

[$-CH_3$] : 1.72 to 1.86 ppm
[$-CF_2H$] : 6.1 to 6.8 ppm
[$-CH_2OH$]: 3.74 to 3.80 ppm
[$-CH_2I$]: 3.87 to 3.92 ppm
[$-OC(O)R_H$] : 1.09 to 1.16 ppm
[-COOH]: 10 to 15 ppm

The amount of each of the functional groups is calculated from the peak intensity based on the integrated value of the peak specified by the measurement described above, and based on the results thereof, the ratio of the numbers of the functional groups is calculated by the following expression.

$$([-CH_2OH] + [-COOH])/([-CH_3] + [-CF_2H] + [-CH_2OH] + [-CH_2I] + [-OC(O)R_H] + [-COOH])$$

The method for setting [$-CH_2OH$] and [-COOH] within the above predetermined ranges is not limited, and the setting can be controlled by a known method (for example, selection or amount of an initiator used for polymerization).

The above fluorine-containing copolymer can be produced by polymerizing the monomers forming the repeating units (a) and (b) and the like by a known method.

The binder for a battery according to the present disclosure may contain a further polymer other than the above

fluorine-containing copolymer. Examples of the further polymer include a fluoropolymer excluding the above fluorine-containing copolymer, polymethacrylate, polymethyl methacrylate, polyacrylonitrile, polyimide, polyamide, polyamideimide, polycarbonate, styrene elastomer, butadiene elastomer, styrene-butadiene elastomer, and polyacrylic acid.

The further polymer is, among these, preferably a fluoropolymer excluding the above fluorine-containing copolymer, more preferably at least one selected from the group consisting of a polyvinylidene fluoride excluding the above fluorine-containing copolymer and a vinylidene fluoride polymer excluding the above fluorine-containing copolymer, and further preferably a polyvinylidene fluoride excluding the above fluorine-containing copolymer.

The binder for a battery according to the present disclosure preferably also further contain a polyvinylidene fluoride excluding the above fluorine-containing copolymer from the viewpoint of obtaining a binder having superior gelation resistance, and being able to form an electrode material layer having superior adhesion, flexibility, and electrolytic solution resistance, and being able to easily form a higher density electrode material layer. The binder for a battery containing a polyvinylidene fluoride together with the fluorine-containing copolymer is a suitable embodiment particularly when the binder for a battery is used for the positive electrode.

The polyvinylidene fluoride (PVdF) is a polymer containing a repeating unit based on vinylidene fluoride (VdF) (hereinafter, referred to as a VdF unit), and is a polymer different from the above fluorine-containing copolymer. The PVdF may be a VdF homopolymer consisting only of a VdF unit in some embodiments, and may be a polymer containing a VdF unit and a repeating unit based on a monomer copolymerizable with VdF (hereinafter, referred to as a monomer unit copolymerizable with VdF) in other embodiments.

In the PVdF, examples of the monomer copolymerizable with VdF include a fluorinated monomer and a non-fluorinated monomer, and a fluorinated monomer is preferable. The fluorinated monomer is preferably a monomer other than the monomer forming the repeating unit (b), and examples thereof include vinyl fluoride, trifluoroethylene, chlorotrifluoroethylene (CTFE), fluoroalkyl vinyl ether, hexafluoropropylene (HFP), and (perfluoroalkyl)ethylene. Examples of the non-fluorinated monomer include ethylene and propylene.

In the PVdF, the monomer copolymerizable with VdF is preferably at least one fluorinated monomer selected from the group consisting of CTFE, fluoroalkyl vinyl ether, and HFP, and more preferably at least one fluorinated monomer selected from the group consisting of CTFE, HFP, and fluoroalkyl vinyl ether.

In the PVdF, the content of the monomer unit copolymerizable with VdF is preferably 0 to 5.0 mol% and more preferably 0 to 3.0 mol% based on all repeating units (all monomer units). In the PVdF, the content of the repeating unit based on a fluorinated monomer excluding the VdF unit (hereinafter, referred to as the fluorinated monomer unit) is preferably less than 5.0 mol%, more preferably less than 3.0 mol%, and further preferably less than 1.0 mol%, based on all monomer units.

In the present disclosure, the formulation of a PVdF can be measured, for example, by $^{19}F$-NMR measurement.

The PVdF may have a polar group. By using a fluorine-containing copolymer and a PVdF having a polar group as the binder, an electrode material layer having far superior adhesion to a metal foil can be formed.

The polar group is not limited as long as it is a functional group having polarity, and is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group, and more preferably a group represented by the general formula: -COOR. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the general formula: -COOR is -COOH or includes -COOH, in some embodiments, -COOH is a carboxylate such as a metal carboxylate or ammonium carboxylate.

In addition, in some embodiments, the carbonyl group-containing group may be a group represented by the general formula: -X-COOR wherein X is an atomic group having a main chain composed of 2 to 15 atoms and having a molecular weight of preferably 350 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

The polar group can be introduced into a PVdF by polymerizing VdF and a monomer having the polar group (hereinafter, referred to as a polar group-containing monomer), or can be introduced into a PVdF by reacting the PVdF with a compound having the polar group, and it is preferable to polymerize VdF and the polar group-containing monomer from the viewpoint of productivity.

By polymerizing VdF and the polar group-containing monomer, a PVdF containing a VdF unit and a repeating unit based on the polar group-containing monomer (hereinafter, referred to as a polar group-containing monomer unit) is obtained. That is, the PVdF preferably contains the polar group-containing monomer unit. The content of the polar group-containing monomer unit is preferably 0.001 to 5.0 mol%, more preferably 0.01 to 3.0 mol%, and further preferably 0.10 to 1.5 mol%, based on all monomer units.

In the present disclosure, the content of the polar group-containing monomer unit in the PVdF, for example wherein the polar group is an acid group such as a carboxylic acid, can be measured by acid-base titration of the acid group.

Examples of the polar group-containing monomer include a hydroxyalkyl (meth)acrylate such as hydroxyethyl acrylate or 2-hydroxypropyl acrylate; an unsaturated monobasic acid such as (meth)acrylic acid, crotonic acid, vinylacetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

When a PVdF is reacted with a compound having the polar group to introduce the polar group into the PVdF, the compound having the polar group may be the polar group-containing monomer, or a silane-based coupling agent or a titanate-based coupling agent having a group that is reactive with the PVdF and a hydrolyzable group. The hydrolyzable group is preferably an alkoxy group. When a coupling agent is used, the coupling agent can be reacted with a PVdF dissolved or swollen in a solvent to add the polar group to the PVdF.

The PVdF may also be obtained by partially dehydrofluorinating a PVdF using a base and then further reacting the partially dehydrofluorinated PVdF with an oxidizing agent. Examples of the oxidizing agent include hydrogen peroxide, a hypochlorite, palladium halide, chromium halide, an alkali metal permanganate, a peracid compound, an alkyl peroxide, and an alkyl persulfate.

The content of the VdF unit of the PVdF is preferably more than 95.0 mol%, more preferably more than 97.0 mol%, and further preferably more than 99.0 mol%, based on all monomer units from the viewpoint of being able to form an electrode material layer having far superior flexibility and adhesion to a metal foil.

In addition, the content of the VdF unit of the PVdF is preferably 95.0 to 99.999 mol%, more preferably more than 95.0 mol%, further preferably 97.0 mol% or more, particularly preferably 98.5 mol% or more, and more preferably 99.99 mol% or less, more preferably 99.90 mol% or less, based on all monomer units from the viewpoint of being able to form an electrode material layer having far superior flexibility and adhesion to a metal foil.

The weight average molecular weight, in terms of polystyrene, of the PVdF is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) using dimethylformamide as a solvent. In addition, the weight average molecular weight of the PVdF may be 1,000,000 or more in some embodiments, and may be 1,500,000 or more in other embodiments, from the viewpoint of being able to form an electrode material layer having quite excellent flexibility and adhesion to a metal foil.

The number average molecular weight, in terms of polystyrene, of the PVdF is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The melting point of the PVdF is preferably 100 to 240°C. The melting point can be determined as the temperature corresponding to the maximum value on the heat-of-fusion curve when the temperature is raised at a rate of 10°C/min using a differential scanning calorimetry (DSC) apparatus.

The PVdF can be produced by a conventionally known method such as solution polymerization or suspension polymerization after appropriately mixing VdF, the above polar group-containing monomer, and an additive such as a polymerization initiator.

The storage elastic modulus of the PVdF at 30°C is preferably 2,000 MPa or less and more preferably 1,800 MPa or less.

The storage elastic modulus of the PVdF at 60°C is preferably 1,500 MPa or less and more preferably 1,300 MPa or less.

The storage elastic modulus of the PVdF at 30°C is preferably 1,000 MPa or more and more preferably 1,100 MPa or more.

The storage elastic modulus of the PVdF at 60°C is preferably 600 MPa or more and more preferably 700 MPa or more.

The storage elastic modulus of the PVdF can be measured by the same method as can the storage elastic modulus of the fluorine-containing copolymer described later.

In the binder for a battery according to the present disclosure, the mass ratio of the fluorine-containing copolymer and the polyvinylidene fluoride, fluorine-containing copolymer/polyvinylidene fluoride, is preferably 99/1 to 1/99, more preferably 97/3 or less, further preferably 95/5 or less, and more preferably 3/97 or more, further preferably 5/90 or more, from the viewpoint of obtaining a binder having superior gelation resistance, being able to form an electrode material layer having superior adhesion, flexibility, and electrolytic solution resistance, and being able to easily form a higher density electrode material layer.

The binder for a battery according to the present disclosure preferably may contain a vinylidene fluoride polymer excluding the above fluorine-containing copolymer from the viewpoint of obtaining a binder having superior gelation resistance, and being able to form an electrode material layer having superior adhesion, flexibility, and electrolytic solution resistance, and being able to easily form a higher density electrode material layer. Examples of the vinylidene fluoride (VdF) polymer excluding the above fluorine-containing copolymer include a polymer containing a VdF unit and a repeating unit based on a fluorinated monomer excluding the VdF unit (hereinafter, referred to as a fluorinated monomer unit). The binder for a battery containing a vinylidene fluoride polymer together with the fluorine-containing copolymer is a suitable embodiment particularly when the binder for a battery is used for the positive electrode.

The fluorinated monomer excluding VdF is preferably a monomer other than the monomer forming the repeating unit (b), and examples thereof include tetrafluoroethylene (TFE), vinyl fluoride, trifluoroethylene, chlorotrifluoroethylene (CTFE), fluoroalkyl vinyl ether, hexafluoropropylene (HFP), and (perfluoroalkyl)ethylene. Among these, at least one selected from the group consisting of TFE, CTFE, and HFP is preferable, and at least one selected from the group consisting of TFE and HFP is more preferable, and TFE is particularly preferable, from the viewpoint of being able to form an electrode material layer having far superior flexibility and adhesion to a metal foil.

The fluorinated monomer unit may or may not have a polar group.

The content of the VdF unit of the VdF polymer is more than 50 mol% and 99 mol% or less based on all monomer units. When the content of the VdF unit is in the above range, it is possible to form an electrode material layer having superior flexibility and adhesion to a metal foil.

The content of the VdF unit of the VdF polymer is preferably 57.0 mol% or more, more preferably 60.0 mol% or more, further preferably 63.0 mol% or more, and preferably 99.0 mol% or less, more preferably 97.0 mol% or less, further preferably 95.0 mol% or less, particularly preferably 90.0 mol% or less, and most preferably 85.0 mol% or less, based on all monomer units from the viewpoint of being able to form an electrode material layer having far superior flexibility and adhesion to a metal foil.

The content of the fluorinated monomer unit, excluding the VdF unit, of the VdF polymer may be less than 50 mol% and is not limited, and is preferably 1.0 mol% or more, more preferably 3.0 mol% or more, further preferably 5.0 mol% or more, particularly preferably 10.0 mol% or more, most preferably 15.0 mol% or more, and preferably 43.0 mol% or less, more preferably 40.0 mol% or less, further preferably 37.0 mol% or less, based on all monomer units from the viewpoint of being able to form an electrode material layer having far superior flexibility and adhesion to a metal foil.

In the present disclosure, the formulation of the VdF polymer can be measured, for example, by $^{19}$F-NMR measurement.

The VdF polymer may further contain a repeating unit based on a non-fluorinated monomer (hereinafter, referred to as a non-fluorinated monomer unit). Examples of the non-fluorinated monomer include a non-fluorinated monomer having no polar group such as ethylene or propylene, and a non-fluorinated monomer having a polar group (hereinafter, sometimes referred to as a polar group-containing monomer).

When a non-fluorinated monomer having a polar group is used, the polar group is introduced into the VdF polymer, and this allows far superior adhesion between the positive electrode material layer and the current collector to be obtained. The polar group that the VdF polymer can have is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group. The number of carbon atoms

of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the general formula: -COOR is -COOH or includes -COOH, in some embodiments, -COOH may be a carboxylate such as a metal carboxylate or ammonium carboxylate.

In addition, in some embodiments, the carbonyl group-containing group may be a group represented by the general formula: -X-COOR wherein X is an atomic group having a main chain composed of 2 to 15 atoms and having a molecular weight of preferably 350 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

Examples of the polar group-containing monomer include a hydroxyalkyl (meth)acrylate such as hydroxyethyl acrylate or 2-hydroxypropyl acrylate; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, acryloyloxypropyl succinate, methacryloyloxyethyl succinate, acryloyloxyethyl phthalate, or methacryloyloxyethyl phthalate; a monoester of an unsaturated dibasic acid such as monomethyl maleate, monoethyl maleate, monomethyl citraconate, or monoethyl citraconate; and a monomer (1) represented by the general formula (1):

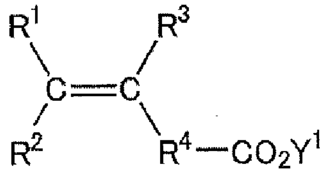

wherein $R^1$ to $R^3$ each independently represent a hydrogen atom or a hydrocarbon group having 1 to 8 carbon atoms, $R^4$ represents a single bond or a hydrocarbon group having 1 to 8 carbon atoms, and $Y^1$ represents an inorganic cation and/or an organic cation.

The polar group-containing monomer unit that the VdF polymer can contain is preferably a repeating unit based on the monomer (1) represented by the general formula (1).

In the general formula (1), $Y^1$ represents an inorganic cation and/or an organic cation. Examples of the inorganic cation include a cation such as H, Li, Na, K, Mg, Ca, Al, or Fe. Examples of the organic cation include a cation such as $NH_4$, $NH_3R^5$, $NH_2R^5_2$, $NHR^5_3$, or $NR^5_4$ wherein $R^5$ independently represents an alkyl group having 1 to 4 carbon atoms. $Y^1$ is preferably H, Li, Na, K, Mg, Ca, Al, or $NH_4$, more preferably H, Li, Na, K, Mg, Al, or $NH_4$, further preferably H, Li, Al, or $NH_4$, and particularly preferably H. Specific examples of the inorganic cation and the organic cation are described by omitting their signs and valences for convenience.

In the general formula (1), $R^1$ to $R^3$ each independently represent a hydrogen atom or a hydrocarbon group having 1 to 8 carbon atoms. The hydrocarbon group is a monovalent hydrocarbon group. The hydrocarbon group preferably has 4 or less carbon atoms. Examples of the hydrocarbon group include an alkyl group, an alkenyl group, and an alkynyl group having the above number of carbon atoms, and a methyl group or an ethyl group is preferable. $R^1$ and $R^2$ are preferably each independently a hydrogen atom, a methyl group, or an ethyl group, and $R^3$ is preferably a hydrogen atom or a methyl group.

In the general formula (1), $R^4$ represents a single bond or a hydrocarbon group having 1 to 8 carbon atoms. The hydrocarbon group is a divalent hydrocarbon group. The hydrocarbon group preferably has 4 or less carbon atoms. Examples of the hydrocarbon group include an alkylene group and an alkenylene group having the above number of carbon atoms, and among these, at least one selected from the group consisting of a methylene group, an ethylene group, an ethylidene group, a propylidene group, and an isopropylidene group is preferable, and a methylene group is more preferable.

The monomer (1) is preferably at least one selected from the group consisting of (meth)acrylic acid and a salt thereof, vinylacetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof, and more preferably at least one selected from the group consisting of 3-butenoic acid and a salt thereof and 4-pentenoic acid and a salt thereof.

The content of the polar group-containing monomer unit of the VdF polymer is preferably 0.05 to 2.0 mol%,

more preferably 0.10 mol% or more, further preferably 0.25 mol% or more, particularly preferably 0.40 mol% or more, and more preferably 1.5 mol% or less, based on all monomer units.

In the present disclosure, the content of the polar group-containing monomer unit in the VdF polymer, for example wherein the polar group is an acid group such as a carboxylic acid, can be measured by acid-base titration of the acid group.

Examples of the VdF polymer include a VdF/TFE copolymer, a VdF/HFP copolymer, a VdF/TFE/HFP copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butenoic acid copolymer, a VdF/TFE/HFP/(meth)acrylic acid copolymer, a VdF/TFE/HFP/4-pentenoic acid copolymer, a VdF/TFE/HFP/3-butenoic acid copolymer, a VdF/TFE/2-carboxyethyl acrylate copolymer, a VdF/TFE/HFP/2-carboxyethyl acrylate copolymer, a VdF/TFE/acryloyloxyethyl succinate copolymer, and a VdF/TFE/HFP/acryloyloxyethyl succinate copolymer.

The VdF polymer is, among these, preferably a VdF polymer consisting only of a VdF unit, a TFE unit, and any non-fluorinated monomer unit from the viewpoint of being able to form an electrode material layer having far superior flexibility and adhesion to a metal foil.

When the VdF polymer contains a VdF unit and a TFE unit, the molar ratio of the VdF unit to the TFE unit, VdF unit/TFE unit, is preferably more than 50/50 and 99/1 or less, more preferably 57/43 to 97/3, further preferably 60/40 to 95/5, particularly preferably 63/37 to 90/10, and most preferably 63/37 to 85/15.

The weight average molecular weight, in terms of polystyrene, of the VdF polymer is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) using dimethylformamide as a solvent.

The number average molecular weight, in terms of polystyrene, of the VdF polymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The melting point of the VdF polymer is preferably 100 to 170°C, more preferably 110 to 165°C, and further preferably 120 to 163°C. The melting point can be determined as the temperature corresponding to the maximum value on the heat-of-fusion curve when the temperature is raised from 30°C to 220°C at a rate of 10°C/min, then lowered to 30°C at 10°C/min, and again raised to 220°C at a rate of 10°C/min using a differential scanning calorimetry (DSC) apparatus.

The VdF polymer preferably has an elongation at break of 100% or more. The elongation at break is more preferably 200% or more and further preferably 300% or more.

The elongation at break can be measured by the following method. That is, the VdF polymer is dissolved in N-methyl-2-pyrrolidone (NMP) in such a way as to have a concentration of 10 to 20% by mass to obtain a VdF polymer solution, the VdF polymer solution is cast onto a glass plate and dried at 100°C for 12 hours and further dried under vacuum at 100°C for 12 hours to obtain a film having a thickness of 50 to 100 μm. The film is punched into a dumbbell shape, and the elongation at break at 25°C is measured using an autograph.

The VdF polymer preferably has a storage elastic modulus of 1,100 MPa or less at 30°C and a storage elastic modulus of 500 MPa or less at 60°C.

The storage elastic modulus of the VdF polymer at 30°C is more preferably 800 MPa or less and further preferably 600 MPa or less.

The storage elastic modulus of the VdF polymer at 60°C is more preferably 350 MPa or less.

The storage elastic modulus of the VdF polymer at 30°C is preferably 100 MPa or more, more preferably 150 MPa or more, and further preferably 200 MPa or more.

The storage elastic modulus of the VdF polymer at 60°C is preferably 50 MPa or more, more preferably 80 MPa or more, and further preferably 130 MPa or more.

The storage elastic modulus is measured values at 30°C and 60°C when a sample having a length of 30 mm, a width of 5 mm, and a thickness of 50 to 100 μm is measured under conditions of tensile mode, a grip width of 20 mm, a measurement temperature of -30°C to 160°C, a temperature-increasing rate of 2°C/min, and a frequency of 1 Hz by dynamic viscoelasticity measurement using Dynamic Viscoelastic Analyzer DVA220 manufactured by IT Measurement Control.

The measurement sample can be created, for example, by casting a VdF polymer solution obtained by dissolving the VdF polymer in N-methyl-2-pyrrolidone (NMP) such that the concentration is 10 to 20% by mass onto a glass plate, drying the cast solution at 100°C for 12 hours and further drying the same under vacuum at 100°C for 12 hours, and cutting the resulting film having a thickness of 50 to 100 μm into a length of 30 mm and a width of 5 mm.

In the binder for a battery according to the present disclosure, the mass ratio of the fluorine-containing copolymer

and the further polymer other than the fluorine-containing copolymer, fluorine-containing copolymer/further polymer, is preferably 99/1 to 1/99, more preferably 97/3 or less, further preferably 95/5 or less, and more preferably 3/97 or more, further preferably 5/95 or more from the viewpoint of obtaining a binder having superior gelation resistance, being able to form an electrode material layer having superior adhesion, flexibility, and electrolytic solution resistance, and being able to easily form a higher density electrode material layer.

In the binder for a battery according to the present disclosure, the mass ratio of the fluorine-containing copolymer and the VdF polymer, fluorine-containing copolymer/VdF polymer, is preferably 99/1 to 1/99, more preferably 97/3 or less, further preferably 95/5 or less, and more preferably 3/97 or more, further preferably 5/95 or more from the viewpoint of obtaining a binder having superior gelation resistance, being able to form an electrode material layer having superior adhesion, flexibility, and electrolytic solution resistance, and being able to easily form a higher density electrode material layer.

The binder for a battery according to the present disclosure can be suitably used as a material for forming a battery such as a secondary battery or a capacitor. The battery may be a primary battery in some embodiments, and may be a storage battery (secondary battery) or an energy storage element in other embodiments. In some embodiments, the battery may be a non-aqueous electrolytic solution battery. The non-aqueous electrolytic solution battery includes all batteries including an electrolytic solution and a power generation element. Examples of the non-aqueous electrolytic solution battery include a lithium ion primary battery, a lithium ion secondary battery, a nickel hydrogen battery, a lithium ion capacitor, and an electric double layer capacitor.

The binder for a battery according to the present disclosure has excellent gelation resistance, further can form an electrode material layer exhibiting sufficient adhesion, sufficient flexibility, and sufficient electrolytic solution resistance, and can easily form a high density electrode material layer, and thus is suitable as a binder used for an electrode of a battery such as a secondary battery or a capacitor. The binder for a battery according to the present disclosure can also be used as a binder for coating a secondary battery separator.

The binder for a battery according to the present disclosure is preferably a binder for a non-aqueous electrolytic solution battery. In addition, in some embodiments, the binder for battery of the present disclosure is a binder for a secondary battery. In the present disclosure, the binder for a secondary battery includes a binder used for a positive electrode, a negative electrode, or a separator of a secondary battery. The secondary battery is preferably a lithium ion secondary battery.

The binder for battery of the present disclosure can also constitute an electrode mixture together with a powder electrode material, water, or a non-aqueous solvent. The secondary battery to which the binder for battery of the present disclosure is applied includes a positive electrode in which a positive electrode mixture is held in a positive electrode current collector, a negative electrode in which a negative electrode mixture is held in a negative electrode current collector, and an electrolytic solution.

The electrode mixture of the present disclosure contains the above binder for battery, a powder electrode material, and water or a non-aqueous solvent. The electrode mixture of the present disclosure is preferably an electrode mixture for a non-aqueous electrolytic solution battery. The electrode mixture of the present disclosure may be an electrode mixture for a secondary battery in some embodiments and may be an electrode mixture for a lithium ion secondary battery in other embodiments. Because the electrode mixture of the present disclosure contains the above binder for a battery, the electrode mixture can be easily adjusted to have a viscosity suitable for coating of a current collector even when the binder for a battery is contained in a high concentration, and is unlikely to increase in viscosity even when stored for a long period of time, has excellent electrolytic solution resistance and adhesion to a metal foil, and can form an electrode material layer having excellent flexibility. In addition, because the electrode mixture of the present disclosure contains the above binder for a battery, it is easy to adjust the electrode mixture to have an appropriate viscosity to improve the coating performance, and additionally, it is possible to retain the appropriate viscosity for a long period of time, and moreover, it is possible to ensure sufficient adhesion to a metal foil (current collector) and a sufficient ability to hold a powder electrode material.

The electrode mixture is a positive electrode mixture used for creating a positive electrode in some embodiments and is a negative electrode mixture used for creating a negative electrode in other embodiments. The electrode material layer formed from the electrode mixture of the present disclosure is a positive electrode material layer in some embodiments and is a negative electrode material layer in other embodiments as long as it contains the above binder for battery and a powder electrode material.

The powder electrode material is a powder electrode material used for a battery, and preferably includes an electrode active material. The electrode active material is divided into a positive electrode active material and a negative electrode active material. In the case of a lithium ion secondary battery, the positive electrode active material is not limited as long as it can electrochemically absorb and desorb a lithium ion, and is preferably a lithium composite oxide and more preferably a lithium transition metal composite oxide. The positive electrode active material is also preferably a lithium-containing transition metal phosphate compound. The positive electrode active material is also preferably a substance containing lithium and at least one transition metal, such as a lithium transition metal composite oxide or a

lithium-containing transition metal phosphate compound.

Preferable examples of the transition metal of the lithium transition metal composite oxide include V, Ti, Cr, Mn, Fe, Co, Ni, and Cu, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and compounds obtained by replacement of a part of the transition metal atoms mainly constituting these lithium transition metal composite oxides with another metal such as Al, Ti, V, Cr, Mn, Fe, Co, Li, Ni, Cu, Zn, Mg, Ga, Zr, or Si. Examples of the compounds obtained by replacement include a lithium-nickel-manganese composite oxide, a lithium-nickel-cobalt-aluminum composite oxide, a lithium-nickel-cobalt-manganese composite oxide, a lithium-manganese-aluminum composite oxide, and a lithium-titanium composite oxide, and more specific examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMh_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

Preferable examples of the transition metal of the lithium-containing transition metal phosphate compound include V, Ti, Cr, Mn, Fe, Co, Ni, and Cu, and specific examples of the lithium-containing transition metal phosphate compound include an iron phosphate compound such as $LiFePO_4$, $Li_3Fe_2(PO_4)_3$, or $LiFeP_2O_7$, a cobalt phosphate compound such as $LiCoPO_4$, and compounds obtained by replacement of a part of the transition metal atoms mainly constituting these lithium transition metal phosphate compounds with another metal such as Al, Ti, V, Cr, Mn, Fe, Co, Li, Ni, Cu, Zn, Mg, Ga, Zr, Nb, or Si.

In particular, $LiCoO_2$, $LiNiO_2$, $LiMn_2O_4$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable from the viewpoint of high voltage, high energy density, charge/discharge cycle characteristics, or the like.

In addition, the lithium transition metal composite oxide is preferably a lithium-nickel-based composite oxide, and more preferably a lithium-nickel-based composite oxide represented by the general formula (7) :

general formula (7) : $Li_yNi_{1-x}M_xO_2$

wherein x is $0.01 \le x \le 0.5$, y is $0.9 \le y \le 1.2$, and M represents a metal atom excluding Li and Ni. The lithium transition metal composite oxide having such a high nickel content is beneficial for increasing the capacity of a secondary battery.

In the general formula (7), x is a coefficient satisfying $0.01 \le x \le 0.5$, and from the viewpoint of being able to obtain a secondary battery having a higher capacity, preferably $0.05 \le x \le 0.4$ and more preferably $0.10 \le x \le 0.3$.

In the general formula (7), examples of the metal atom of M include V, Ti, Cr, Mn, Fe, Co, Cu, Al, Zn, Mg, Ga, Zr, and Si. The metal atom of M is preferably a transition metal such as V, Ti, Cr, Mn, Fe, Co, or Cu, or a combination of any of the above transition metals and a further metal such as Al, Ti, V, Cr, Mn, Fe, Co, Cu, Zn, Mg, Ga, Zr, or Si.

The lithium transition metal composite oxide having a high nickel content is preferably at least one selected from the group consisting of $LiNi_{0.80}Co_{0.15}Al_{0.05}O_2$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$, and more preferably at least one selected from the group consisting of $LiNi_{0.82}Co_{0.15}Al_{0.03}O_2$, $LiNi_{0.6}Mn_{0.2}Co_{0.2}O_2$, and $LiNi_{0.8}Mn_{0.1}Co_{0.1}O_2$.

In addition, these positive electrode active materials used may each have a surface to which a substance different in formulation from the substance mainly constituting the positive electrode active material adheres. Examples of the surface adhering substance include an oxide such as aluminum oxide, silicon oxide, titanium oxide, zirconium oxide, magnesium oxide, calcium oxide, boron oxide, antimony oxide, or bismuth oxide, a sulfate such as lithium sulfate, sodium sulfate, potassium sulfate, magnesium sulfate, calcium sulfate, or aluminum sulfate, and a carbonate such as lithium carbonate, calcium carbonate, or magnesium carbonate.

These surface adhering substances can each be adhered to the surface of a positive electrode active material, for example, by a method involving dissolving or suspending the surface adhering substance in a solvent to add the resulting solution or suspension to the positive electrode active material by impregnation and drying the same, a method involving dissolving or suspending a surface adhering substance precursor in a solvent to add the resulting solution or suspension to the positive electrode active material by impregnation and then reacting these by heating or the like, or a method involving adding the surface adhering substance to a positive electrode active substance precursor and simultaneously calcining these.

The lower limit of the amount by mass of the surface adhering substance used is preferably 0.1 ppm or more, more preferably 1 ppm or more, and further preferably 10 ppm or more, and the upper limit thereof is preferably 20% or less, more preferably 10% or less, and further preferably 5% or less based on the positive electrode active material. The surface adhering substance can suppress the oxidation reaction of the non-aqueous electrolytic solution on the surface of the positive electrode active material and improve the battery life, and if the amount thereof adhered is too small, the effects thereof are not sufficiently developed, and if the amount is too large, the resistance may increase because the surface adhering substance inhibits the entry and exit of a lithium ion.

A particle of the positive electrode active material may have a blocky shape, a polyhedral shape, a spherical shape, an oval shape, a plate-like shape, a needle-like shape, a columnar shape, or the like as conventionally used,

and among these, preferably, a primary particle aggregates to form a secondary particle that has a spherical shape or an oval shape. Usually, the active material in the electrode expands and contracts with the charge and discharge of an electrochemical element, and thus the stress thereof is likely to cause a deterioration such as destruction of the active material or disconnection of a conductive path. Because of this, an active material in which a primary particle aggregates to form a secondary particle is more preferable than a single particle active material containing only a primary particle because the former relaxes the stress of expansion and contraction and prevents a deterioration. In addition, a particle having a spherical shape or an oval shape is more preferable than an axially oriented particle such as a particle having a plate-like shape because the former particle is less oriented when an electrode is molded and thus the electrode also expands and contracts less during charge and discharge, and even when the former particle is mixed with a conductive agent in electrode creation, it is easy to mix the former particle uniformly.

The tap density of the positive electrode active material is usually 1.3 g/cm$^3$ or more, preferably 1.5 g/cm$^3$ or more, further preferably 1.6 g/cm$^3$ or more, and most preferably 1.7 g/cm$^3$ or more. If the tap density of the positive electrode active material is lower than the above lower limit, when forming a positive electrode material layer, the required amount of a dispersion medium increases, the required amount of a conductive agent or a binder increases, and the rate of filling of the positive electrode material layer with the positive electrode active material may be limited to limit the battery capacity. A high density positive electrode material layer can be formed by using a metal composite oxide powder having a high tap density. In general, a larger tap density is more preferable, and there is no particular upper limit thereon, and if the tap density is too large, the diffusion of a lithium ion using a non-aqueous electrolytic solution as a medium in the positive electrode material layer may be rate-determining to easily reduce the load characteristics, and thus the upper limit of the tap density is usually 2.5 g/cm$^3$ or less and preferably 2.4 g/cm$^3$ or less.

The density determined as follows is defined as the tap density of the positive electrode active material: a sample is passed through a sieve having an opening size of 300 |jm, dropped into a tapping cell of 20 cm$^3$ to fill the cell volume, then tapping is carried out at a stroke length of 10 mm 1000 times using a powder density measuring instrument (for example, Tap Denser manufactured by Seishin Enterprise Co., Ltd.), and the density is determined from the volume at that time and the weight of the sample.

The median diameter d50 (secondary particle size when a primary particle aggregates to form a secondary particle) of the particle of the positive electrode active material is usually 0.1 μm or more, preferably 0.5 μm or more, more preferably 1 μm or more, most preferably 3 μm or more, and usually 20 μm or less, preferably 18 μm or less, more preferably 16 μm or less, most preferably 15 μm or less. If d50 is lower than the above lower limit, it may not be possible to obtain a high bulk density product, and if d50 exceeds the upper limit, for example the following problems may occur: it takes time to diffuse lithium in the particles, resulting in reduction in battery performance, and when creating a positive electrode of a battery, that is, slurrying an active material and a conductive agent, a binder, or the like using a solvent to apply the resulting slurry in the form of a thin film, a streak is formed. Here, mixing of two or more positive electrode active materials having different median diameters d50 can also further improve the filling property when creating a positive electrode.

The median diameter d50 in the present disclosure is measured using a known laser diffraction/scattering type particle size distribution measurement apparatus. When LA-920 manufactured by HORIBA, Ltd. is used as a particle size distribution analyzer, d50 is measured by using a 0.1% by mass sodium hexametaphosphate aqueous solution as a dispersion medium used for the measurement, carrying out ultrasonic dispersion for 5 minutes, and then setting the measurement refractive index to 1.24.

When a primary particle aggregates to form a secondary particle, the average primary particle size of the positive electrode active material is usually 0.01 μm or more, preferably 0.05 μm or more, further preferably 0.08 μm or more, most preferably 0.1 μm or more, and usually 3 μm or less, preferably 2 μm or less, further preferably 1 μm or less, most preferably 0.6 μm or less. If the average primary particle size exceeds the above upper limit, it is difficult to form a spherical secondary particle, which adversely affects the powder filling property and greatly reduces the specific surface area, and thus battery performance such as output characteristics may be likely to decrease. On the contrary, if the average primary particle size is lower than the above lower limit, a crystal is usually underdeveloped, which may cause a problem such as poor charge/discharge reversibility. The primary particle size is measured by observation using a scanning electron microscope (SEM). Specifically, the primary particle size is determined by obtaining the value of the longest segment of a straight line in the horizontal direction formed by the left and right boundary lines of a primary particle on a photograph at a magnification of 10,000 times for each of any 50 primary particles and averaging the obtained values.

The BET specific surface area of the positive electrode active material is 0.2 m$^2$/g or more, preferably 0.3 m$^2$/g or more, further preferably 0.4 m$^2$/g or more, and 4.0 m$^2$/g or less, preferably 2.5 m$^2$/g or less, further preferably 1.5 m$^2$/g or less. If the BET specific surface area is smaller than this range, the battery performance easily decreases, and if the BET specific surface area is larger than this range, the tap density does not easily increase, and a problem may easily occur in the coating performance when forming the positive electrode material layer.

The BET specific surface area is defined as a value determined using a surface area meter (for example, a

fully automatic surface area measurement apparatus manufactured by Ohkura Riken) by pre-drying a sample at 150°C for 30 minutes under a nitrogen flow and then measuring the sample by the nitrogen adsorption BET single point method according to the gas flow method using a nitrogen helium mixed gas accurately adjusted such that the value of nitrogen pressure relative to atmospheric pressure is 0.3.

The method for producing a positive electrode active material may be a general method used as a method for producing an inorganic compound. In particular, various methods can be considered for creating a spherical or oval active material, and examples thereof include a method for obtaining an active material by dissolving or pulverizing and dispersing a transition metal raw material such as a transition metal nitrate or sulfate and optionally a raw material of another element in a solvent such as water and regulating the pH while stirring to create and recover a spherical precursor, optionally drying this precursor, then adding a Li source such as LiOH, $Li_2C0_3$, or $LiNO_3$, and calcining the resulting mixture at a high temperature, a method for obtaining an active material by dissolving or pulverizing and dispersing a transition metal raw material such as a transition metal nitrate, sulfate, hydroxide, or oxide and optionally a raw material of another element in a solvent such as water, drying and molding the resulting solution or suspension using a spray dryer or the like to obtain a spherical or oval precursor, adding a Li source such as LiOH, $Li_2CO_3$, or $LiNO_3$ to this precursor, and calcining the resulting mixture at a high temperature, and a method for obtaining an active material by dissolving or pulverizing and dispersing a transition metal raw material such as a transition metal nitrate, sulfate, hydroxide, or oxide, a Li source such as LiOH, $Li_2CO_3$, or $LiNO_3$, and optionally a raw material of another element in a solvent such as water, drying and molding the resulting solution or suspension using a spray dryer or the like to obtain a spherical or oval precursor, and calcining this precursor at a high temperature.

In the present disclosure, one positive electrode active material powder may be used alone, or two or more positive electrode active material powders having different formulations or different powder physical characteristics may be used together in any combination and ratio.

The negative electrode active material is not limited as long as it can electrochemically absorb and desorb a lithium ion, and examples thereof include a carbonaceous material, a metal oxide such as tin oxide or silicon oxide, a metal composite oxide, simple lithium and a lithium alloy such as a lithium-aluminum alloy, and a metal that can form an alloy with lithium such as Sn or Si. One of these may be used alone or two or more thereof may be used together in any combination and ratio. Among these, a carbonaceous material or a lithium composite oxide is preferably used from the viewpoint of safety.

The metal composite oxide is not limited as long as it can absorb and desorb lithium, and from the viewpoint of high current density charge/discharge characteristics, it is preferable to contain titanium and/or lithium as a constituent.

From the viewpoint of a good balance between the initial irreversible capacity and the high current density charge/discharge characteristics, the carbonaceous material is preferably selected from:

(1) natural graphite;

(2) an artificial carbonaceous substance and an artificial graphite substance; and a carbonaceous material obtained by one or more times of heat treatment in the range of 400°C to 3,200°C of a carbonaceous substance {for example, natural graphite, coal-based coke, petroleum-based coke, coal-based pitch, petroleum-based pitch, or a material obtained by oxidation treatment of any of these pitches; needle coke, pitch coke, or a carbon material obtained by partial graphitization of any of these cokes; a pyrolysate of an organic substance such as furnace black, acetylene black, or pitch-based carbon fiber; a carbonizable organic substance (for example, coal tar pitches from soft pitch to hard pitch; a coal-based heavy oil such as dry distillation/liquefaction oil; a straight-run heavy oil such as atmospheric residue or vacuum residue; a cracking-derived petroleum heavy oil such as ethylene tar as a byproduct generated in thermal cracking of crude oil, naphtha, or the like; further, an aromatic hydrocarbon such as acenaphthylene, decacyclene, anthracene, or phenanthrene; a N-ring compound such as phenazine or acridine; a S-ring compound such as thiophene or bithiophene; a polyphenylene such as biphenyl or terphenyl; polyvinyl chloride, polyvinyl alcohol, polyvinyl butyral, or a material obtained by insolubilizing any thereof; a nitrogen-containing organic polymer such as polyacrylonitrile or polypyrrole; a sulfur-containing organic polymer such as polythiophene or polystyrene; a natural polymer such as a polysaccharide typified by cellulose, lignin, mannan, polygalacturonic acid, chitosan, or saccharose; a thermoplastic resin such as polyphenylene sulfide or polyphenylene oxide; a thermosetting resin such as a furfuryl alcohol resin, a phenolformaldehyde resin, or an imide resin) and a carbide of any of these; and a solution obtained by dissolving a carbonizable organic substance in a low-molecular-weight organic solvent such as benzene, toluene, xylene, quinoline, or n-hexane, and a carbide thereof};

(3) a carbonaceous material in which the negative electrode material layer is composed of at least two or more carbonaceous substances having different crystallinities and/or has an interface at which the carbonaceous substances having different crystallinities are in contact with each other; and

(4) a carbonaceous material in which the negative electrode material layer is composed of at least two carbonaceous substances having different orientations and/or has an interface at which the carbonaceous substances having different orientations are in contact with each other.

The content of the electrode active material (positive electrode active material or negative electrode active material) is preferably 40% by mass or more in the electrode mixture in order to increase the capacity of the electrode obtained.

The powder electrode material may further include a conductive agent. Examples of the conductive agent include a carbon black such as acetylene black or ketjen black, a carbon material such as graphite, a carbon fiber, a carbon nanotube, a carbon nanohorn, and graphene.

The proportion by mass of the powder electrode material (active material and conductive agent) to the above binder for battery in the electrode mixture is usually about 80:20 to 99.5:0.5 and is determined in consideration of the holding of the powder components, the adhesion to the current collector, and the conductivity of the electrode.

With the blending proportion as described above, the above binder for battery cannot completely fill a gap between the powder components in the electrode material layer formed on the current collector, but when water or a non-aqueous solvent that dissolves or disperses the binder for battery well is used as a solvent, the binder for battery is uniformly dispersed to form a network structure in the electrode material layer after drying, which holds the powder component well and thus is preferable.

The electrode mixture of the present disclosure contains water or a non-aqueous solvent. Examples of the non-aqueous solvent include a nitrogen-containing organic solvent such as N-methyl-2-pyrrolidone, N,N-dimethylacetamide, or dimethylformamide; a ketone-based solvent such as acetone, methylethylketone, cyclohexanone, or methyl isobutyl ketone; an ester-based solvent such as ethyl acetate or butyl acetate; an ether-based solvent such as tetrahydrofuran or dioxane; and also a general-purpose organic solvent having a low boiling point such as a mixed solvent thereof.

The electrode mixture of the present disclosure preferably contains a non-aqueous solvent among the above, preferably contains at least one selected from the group consisting of N-methyl-2-pyrrolidone and N,N-dimethylacetamide, and more preferably contains N-methyl-2-pyrrolidone, from the viewpoint of excellent stability and coating performance of the electrode mixture.

The amount of water or a non-aqueous solvent in the electrode mixture is determined in consideration of coating of the current collector, formation of a thin film after drying, and the like. Usually, the proportion by mass of the binder for battery to water or a non-aqueous solvent the liquid is preferably 0.5:99.5 to 20:80.

The electrode mixture may further include, for example, an acrylic resin such as polyacrylic acid, polymethacrylate, or polymethyl methacrylate, and a polyimide, polyamide, or polyamideimide-based resin, styrene elastomer, butadiene elastomer, or styrene-butadiene elastomer, in order to further improve the adhesion to a current collector.

In order to improve the dispersion stability of an electrode slurry, a dispersant such as a resin-based or cationic surfactant or a nonionic surfactant having a surfactant action and the like may be added to the electrode mixture.

The content of the binder for battery in the electrode mixture is preferably 0.1 to 20% by mass, more preferably 0.2 to 10% by mass and further preferably 0.5 to 3% by mass based on the mass of the electrode mixture.

Examples of a method for preparing the electrode mixture include a method involving dispersing and mixing the powder electrode material into a solution or a dispersion obtained by dissolving or dispersing the binder for battery in water or a non-aqueous solvent. Then, the obtained electrode mixture is uniformly applied to a current collector such as a metal foil or a metal net, dried, and optionally pressed to form a thin electrode material layer on the current collector to form a thin-film electrode.

In addition, an electrode mixture may be created by first mixing a powder of the binder for battery and a powder of the electrode material and then adding water or a non-aqueous solvent. In addition, an electrode sheet can also be created by heating and melting a powder of the binder for battery and a powder of the electrode material and extruding the resulting melt using an extruder to create a thin-film electrode mixture, and bonding the thin-film electrode mixture to a current collector to which a conductive adhesive or a general-purpose organic solvent is applied. Further, a solution or a dispersion of the powder of the binder for battery and the powder of the electrode material may be applied to an electrode material preformed in advance. As described above, the method of application as a binder for battery is not limited.

The electrode of the present disclosure contains the above binder for a battery. The electrode of the present disclosure is preferably an electrode for a non-aqueous electrolytic solution battery. Because the electrode of the present disclosure contains the above binder for a battery, even when the powder electrode material is thickly applied, wound, and pressed for high density, the electrode is not cracked and there is no shedding of the powder electrode material or peeling off from the current collector. Further, the electrode of the present disclosure is also excellent in electrolytic solution resistance.

The above electrode preferably includes a current collector and an electrode material layer containing the above powder electrode material and the above binder for battery and formed on the current collector. The above electrode is a positive electrode in some embodiments and is a negative electrode in other embodiments, and is preferably a positive electrode.

Examples of the current collector (positive electrode current collector and negative electrode current collector) include a metal foil and a metal mesh of iron, stainless steel, copper, aluminum, nickel, titanium, or the like. Among

these, an aluminum foil or the like is preferable as the positive electrode current collector, and a copper foil or the like is preferable as the negative electrode current collector.

The electrode of the present disclosure can be produced, for example, by the method described above. The above electrode mixture has excellent coating performance, and thus an electrode including a smooth, uniform, and thick electrode material layer can be easily created by creating the electrode material layer included in the electrode of the present disclosure using the above electrode mixture.

The secondary battery of the present disclosure includes the above electrode. The secondary battery of the present disclosure is preferably a non-aqueous electrolytic solution secondary battery. In the secondary battery of the present disclosure, at least one of the positive electrode and the negative electrode may be the above electrode, and the positive electrode is preferably the above electrode. The secondary battery is preferably a lithium ion secondary battery.

The secondary battery of the present disclosure preferably further includes a non-aqueous electrolytic solution. The non-aqueous electrolytic solution is not limited, and may be one or two or more of a known hydrocarbon-based solvent such as propylene carbonate, ethylene carbonate, butylene carbonate, γ-butyl lactone, 1,2-dimethoxyethane, 1,2-diethoxyethane, dimethyl carbonate, diethyl carbonate, or ethylmethyl carbonate; and a fluorinated solvent such as fluoroethylene carbonate, fluoroether, or fluorinated carbonate. Any conventionally known electrolyte can be used, and $LiClO_4$, $LiAsF_6$, $LiPF_6$, $LiBF_4$, LiCl, LiBr, $CH_3SO_3Li$, $CF_3SO_3Li$, cesium carbonate, or the like can be used.

In addition, a separator may be interposed between the positive electrode and the negative electrode. The separator may be a conventionally known separator or a separator using the above binder for battery for coating.

It is also preferable to use the above binder for battery for at least one of the positive electrode, the negative electrode, and the separator of the secondary battery (preferably lithium ion secondary battery).

A film for a secondary battery made of the above binder for battery is also one of the preferable embodiments of the present disclosure.

A laminate for a secondary battery having a substrate and a layer made of the above binder for battery formed on the substrate is also one of the preferable embodiments of the present disclosure. Examples of the substrate include those given as examples of the above current collector, and a known substrate (porous film or the like) used for a separator of a secondary battery.

The electrode of the present disclosure has excellent flexibility, has the current collector and the electrode material layer sufficiently adhered to each other, and can form a secondary battery having excellent battery characteristics, and thus can be suitably used as an electrode for a wound type secondary battery. In addition, in some embodiments, the secondary battery of the present disclosure may be a wound type secondary battery.

The electrode of the present disclosure is useful not only for the lithium ion secondary battery using a liquid electrolyte described above, but also for a polymer electrolyte lithium secondary battery, as an electrode for a non-aqueous electrolyte secondary battery. In addition, the electrode of the present disclosure is also useful for an electric double layer capacitor.

The embodiments have been described above, and it will be understood that various modifications of the embodiments and details are possible without departing from the spirit and scope of the claims.

## EXAMPLES

Next, the embodiments of the present disclosure will be described with reference to Examples, but the present disclosure is not limited only to the Examples.

The numerical values in the Examples were measured by the following methods.

### <Polymer formulation>

The formulation of a fluorine-containing copolymer and a PVdF was measured by a solution NMR method.

Measuring apparatus: VNMRS400 manufactured by Varian, Inc.
Resonance frequency: 376.04 (Sfrq)
Pulse width: 30° (pw = 6.8)

### (Content of polar group-containing monomer unit in PVdF)

The content of a polar group-containing monomer unit (acrylic acid unit, 3-butenoic acid unit, maleic acid, or the like) in a PVdF was measured by acid-base titration of a carboxyl group. Specifically, about 0.5 g of a PVdF was dissolved in acetone at a temperature of 70 to 80°C. 5 ml of water was added dropwise under vigorous stirring to avoid coagulation of the PVdF. The resulting mixture was subjected to titration with a NaOH aqueous solution having a

concentration of 0.1 N until complete neutralization of acidity, with neutral transition at about -270 mV. From the measurement results, the amount of substance of the polar group-containing monomer unit contained in 1 g of the PVdF was determined to calculate the content of the polar group-containing monomer unit.

<Mooney viscosity (ML1 + 10 (121°C, 140°C))>

The Mooney viscosity was measured according to ASTM-D1646-15 and JIS K6300-1:2013.

Measuring instrument: Model MV2000E manufactured by ALPHA TECHNOLOGIES
Rotor rotation speed: 2 rpm
Measurement temperature: 121°C, 140°C

<Glass transition temperature (Tg)>

Using a differential scanning calorimeter (DSC822e manufactured by Mettler Toledo, or X-DSC7000 manufactured by Hitachi High-Tech Science Corporation), the temperature of 10 mg of a sample was raised at 20°C/min to obtain a DSC curve, and the temperature indicating an intersection point of the extensions of the base lines before and after the secondary transition of the DSC curve and the tangent line at an inflection point of the DSC curve was defined as the glass transition temperature.

<Heat of fusion>

Using a differential scanning calorimeter (DSC822e manufactured by Mettler Toledo, or X-DSC7000 manufactured by Hitachi High-Tech Science Corporation), the temperature of 10 mg of a sample was raised at 20°C/min to obtain a DSC curve, and the heat of fusion was calculated from the magnitude of the melting peak (ΔH) that appeared in the DSC curve.

<Proportion of polar group contained>

Terminal group analysis by NMR by the method described above was carried out, and the proportion of ([$-CH_2OH$] + [-COOH])/([$-CH_3$] + [$-CF_2H$] + [$-CH_2OH$] + [$-CH_2I$] + [$-OC(O)R_H$] + [-COOH]) was calculated.

<Weight average molecular weight>

The weight average molecular weight was measured by gel permeation chromatography (GPC). The weight average molecular weight was calculated from data (reference: polystyrene) obtained by measurement using AS-8010, CO-8020, and columns (three GMHHR-H connected in series) manufactured by Tosoh Corporation and RID-10A manufactured by Shimadzu Corporation under a flow of dimethylformamide (DMF) as a solvent at a flow rate of 1.0 ml/min.

<Storage elastic modulus (E')>

The storage elastic modulus is a value measured at 30°C or 60°C by dynamic viscoelasticity measurement, and a test piece having a length of 30 mm, a width of 5 mm, and a thickness of 50 to 100 μm was measured under conditions of tensile mode, a grip width of 20 mm, a measurement temperature of -30°C to 160°C, a temperature-increasing rate of 2°C/min, and a frequency of 1 Hz using Dynamic Viscoelastic Analyzer DVA220 manufactured by IT Measurement Control.

The test piece used for measurement was created by casting a solution obtained by dissolving a PVdF in N-methyl-2-pyrrolidone (NMP) such that the concentration was 10 to 20% by mass onto a glass plate, drying the cast solution at 100°C for 12 hours and further drying the same under vacuum at 100°C for 12 hours, and cutting the resulting film having a thickness of 50 to 100 μm into a length of 30 mm and a width of 5 mm.

<Melting point>

The temperature corresponding to the maximum value on the heat of fusion curve when the temperature was raised from 30°C to 220°C at a rate of 10°C/min, then lowered to 30°C at 10°C/min, and again raised to 220°C at a rate of 10°C/min using a differential scanning calorimetry (DSC) apparatus was determined as the melting point.

<Viscosity change rate of positive electrode mixture>

The viscosity of the positive electrode mixture 10 minutes after the start of measurement was measured using a B-type viscometer (manufactured by Brookfield, DV2T) under conditions of 25°C, spindle LV-04 (64), and a rotation speed of 6 rpm. The viscosity change rate (Xn) was determined from the viscosity (η0) of the positive electrode mixture measured immediately after the preparation of the positive electrode mixture and the viscosity (ηn) 72 hours after the preparation of the mixture, by the following expression.

$$Xn = \eta n/\eta 0 \times 100\ [\%]$$

<Peel strength between positive electrode material layer and positive electrode current collector of positive electrode>

The positive electrode including a positive electrode material layer on one side was cut off to create a 1.2 cm × 7.0 cm test piece. The positive electrode material layer side of the test piece was fixed to a movable jig using a double-sided tape, then a tape was attached to the surface of a positive electrode current collector, and the stress (N/cm) when the tape was pulled at an angle of 90 degrees at a speed of 100 mm/min was measured using an autograph. 1 N was used for the load cell of the autograph.

<Maximum test force>

Bending strength (3-point bending test) was measured by a method according to ASTM D790. A positive electrode including a positive electrode material layer on each of both sides or a negative electrode including a negative electrode material layer on each of both sides was cut into a size of 15 mm × 20 mm to prepare a test piece. According to the 3-point bending method, the test piece was disposed between a first point and a second point, which were 10 mm apart, and the center (third point) of the test piece was pushed at a constant speed in the test piece thickness direction using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe.

<Maximum bending diameter>

A 2 cm × 10 cm test piece was created by cutting off a positive electrode including a positive electrode material layer on each of both sides, and wound around a round bar having a diameter of 1.0 mm, a round bar having a diameter of 2.0 mm, or a round bar having a diameter of 3.0 mm, and the positive electrode was visually observed to check the presence or absence of a crack in the positive electrode material layer, and evaluated according to the following criteria.

1 mm: No pinhole was found in the positive electrode material layer even when the test piece was wound around a round bar having a diameter of 1.0 mm.

2 mm: No pinhole was found in the positive electrode material layer even when the test piece was wound around a round bar having a diameter of 2.0 mm, whereas a pinhole was observed in the positive electrode material layer when the test piece was wound around a round bar having a diameter of 1.0 mm.

3 mm: No pinhole was found in the positive electrode material layer even when the test piece was wound around a round bar having a diameter of 3.0 mm, whereas a pinhole was observed in the positive electrode material layer when the test piece was wound around a round bar having a diameter of 2.0 mm.

4 mm: When the test piece was wound around a round bar having a diameter of 3.0 mm, a pinhole was observed in the positive electrode material layer, or the test piece was broken.

<Springback>

A positive electrode including a positive electrode material layer on each of both sides was cut off into a size of 13 mmΦ to create a test piece, and the mass and the area of the test piece were measured. Then, from the mass of each of the test piece and the positive electrode current collector, the area of the test piece, and the thickness of the positive electrode material layer measured using a micrometer, the density of the positive electrode material layer was calculated, and this was defined as the density ($D_0$). The test piece was dried in a vacuum dryer at 120°C for 96 hours, and then the density of the positive electrode material layer was calculated in the same manner and defined as the density ($D_n$). The springback rate ($Y_n$) was determined from the resulting values by the following expression. A smaller springback rate is more preferable because the decrease in density of the positive electrode material layer due to heat treatment is smaller.

$$Y_n = D_0/D_n \times 100\ (\%)$$

<Electrode electrolytic solution swelling test>

A positive electrode including a positive electrode material layer on each of both sides was cut off into a size of 13 mmΦ to create a test piece, and the mass ($G_0$) of the test piece was measured. Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter to obtain a non-aqueous electrolytic solution. The mass ($G_n$) of the test piece after immersing the prepared test piece in the obtained non-aqueous electrolytic solution at 60°C for 30 days was measured. The electrode electrolytic solution swelling rate ($X_n$) was determined from the measured values by the following expression. A smaller swelling rate is more preferable because the increase in the resistance value of the positive electrode material layer at the time of a battery test can be suppressed.

$$X_n = G_n/G_0 \times 100\ (\%)$$

<Positive electrode evaluation>

(Preparation of electrolytic solution)

Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter, and 2% by mass of vinylene carbonate was added to this mixture to obtain a non-aqueous electrolytic solution.

(Creation of lithium ion secondary battery)

The positive electrode including a positive electrode material layer on one side created in each of the Examples and the Comparative Examples was cut out into a shape having a coated portion (positive electrode material layer) having a width of 50 mm and a length of 30 mm and an uncoated portion having a width of 5 mm and a length of 9 mm.

1 Part by mass of an aqueous dispersion of carboxymethyl cellulose sodium (concentration of carboxymethyl cellulose sodium of 1% by mass) and 1 part by mass of an aqueous dispersion of styrene butadiene elastomer (concentration of styrene butadiene elastomer of 50% by mass) as a thickener and a binder were added to 98 parts by mass of artificial graphite and mixed using a disperser to form a slurry. The obtained slurry was applied to a copper foil having a thickness of 20 μm, dried, and rolled using a press, the rolled foil was cut out into a shape having a coated portion (negative electrode material layer) having a width of 52 mm and a length of 32 mm and an uncoated portion having a width of 5 mm and a length of 9 mm, and the cut foil was used as the negative electrode.

(Creation of aluminum laminated cell)

The positive electrode and the negative electrode were opposed to each other via a microporous polyethylene film (separator) having a thickness of 20 μm, the non-aqueous electrolytic solution obtained above was injected, the non-aqueous electrolytic solution was caused to sufficiently permeate into the separator and the like, and then the resultant was sealed, precharged, and aged to create a lithium ion secondary battery.

(Measurement of battery characteristics)

For the obtained aluminum laminated cell, the cycle capacity retention rate and the resistance increase rate at 60°C were investigated as follows.

(Cycle capacity retention rate)

At 25°C, the battery was charged to 4.2 V at a constant current corresponding to 0.2 C, and then discharged to 3.0 V at a constant current of 0.2 C. 2 cycles of this operation were carried out to stabilize the battery. After that, at 60°C, the secondary battery produced above was charged to 4.2 V at a constant current of 1 C, then charged at a constant voltage of 4.2 V until the current value was 0.05 C, and discharged to 3.0 V at a constant current of 1 C to

determine the initial discharge capacity. Charge and discharge were carried out in the same manner, and the discharge capacity after 300 cycles was measured. The proportion of the discharge capacity after 300 cycles to the initial discharge capacity was determined based on the following expression, and this was defined as the cycle capacity retention rate (%). Results are shown in Table 2.

$$\text{(Discharge capacity after 300 cycles)/(initial discharge capacity)} \times 100 = \text{cycle capacity retention rate (\%)}$$

(Measurement of resistance increase rate)

The resistance (initial resistance) of the battery in the fully charged state at the time of calculating the initial discharge capacity stabilized as described above and the resistance thereof in the fully charged state at the time of the 300 cycle test were measured. The measurement temperature was 25°C. The resistance increase rate after the cycle test was determined based on the following expression. Results are shown in Table 2.

$$\text{Resistance increase rate (\%)} = \text{resistance } (\Omega) \text{ at the time of 300 cycle test/resistance } (\Omega) \text{ at the time of calculating initial discharge capacity} \times 100$$

<Negative electrode evaluation>

(Preparation of electrolytic solution)

Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter, and 2% by mass of vinylene carbonate was added to this mixture to obtain a non-aqueous electrolytic solution.

(Creation of lithium ion secondary battery)

The negative electrode including a negative electrode material layer on one side created in each of the Examples and the Comparative Examples was cut out to φ13 mm as the size of the negative electrode material layer.

(Creation of Li metal-negative electrode half-cell)

The above negative electrode and a Li metal punched to φ15 mm were opposed to each other via a microporous polyethylene film (separator) having a thickness of 20 μm, and the non-aqueous electrolytic solution obtained above was injected to sufficiently permeate the non-aqueous electrolytic solution into a separator or the like to create a Li metal-negative electrode half-cell.

(Measurement of battery characteristics)

For the obtained Li metal-negative electrode half-cell, the cycle capacity retention rate and the resistance increase rate at 25°C were investigated as follows.

(Cycle capacity retention rate)

At 25°C, the battery was charged to 0.01 V at a constant current corresponding to 0.1 C, then charged at a constant voltage of 0.01 V until the current value was 0.02 C, and discharged to 1.5 V at a constant current of 0.1 C. 2 cycles of this operation were carried out to stabilize the battery. After that, the half-cell produced above was charged to 0.01 V at a constant current of 0.5 C, then charged at a constant voltage of 0.01 V until the current value was 0.02 C, and discharged to 1.5 V at a constant current of 0.5 C to determine the initial discharge capacity. Charge and discharge were carried out in the same manner, and the discharge capacity after 100 cycles was measured. The proportion of the

discharge capacity after 100 cycles to the initial discharge capacity was determined based on the following expression, and this was defined as the cycle capacity retention rate (%). The measured temperature in the cycle test was 25°C. Results are shown in Table 3 and Table 4.

$$\text{(Discharge capacity after 100 cycles)/(initial discharge capacity)} \times 100 = \text{cycle capacity retention rate (\%)}$$

(Measurement of resistance increase rate)

The resistance (initial resistance) of the battery in the fully charged state at the time of calculating the initial discharge capacity stabilized as described above and the resistance thereof in the fully charged state at the time of the 100 cycle test were measured. The measurement temperature was 25°C. The resistance increase rate after the cycle test was determined based on the following expression. Results are shown in Table 3 and Table 4.

$$\text{Resistance increase rate (\%)} = \text{resistance } (\Omega) \text{ at the time of 100 cycle test/resistance } (\Omega) \text{ at the time of calculating initial discharge capacity} \times 100$$

In the Examples and the Comparative Examples, the following polymers were used.
Fluorine-containing copolymer

a: Molar ratio of 2,3,3,3-tetrafluoropropene to VdF (2,3,3,3-tetrafluoropropene/VdF): 23.1/76.9

Mooney viscosity (ML1 + 10 (121°C)): 25
Glass transition temperature (Tg): -13°C
Heat of fusion: Not found in the second run
Proportion of polar group contained: Below detectable limit

b: Molar ratio of 2,3,3,3-tetrafluoropropene to VdF (2,3,3,3-tetrafluoropropene/VdF): 21.4/78.6

Mooney viscosity (ML1 + 10 (140°C)): 65
Glass transition temperature (Tg): -13°C
Heat of fusion: Not found in the second run
Proportion of polar group contained: 0.07

c: Molar ratio of 2,3,3,3-tetrafluoropropene to VdF (2,3,3,3-tetrafluoropropene/VdF): 22.1/77.9

Mooney viscosity (ML1 + 10 (140°C)): 37
Glass transition temperature (Tg): -13°C
Heat of fusion: Not found in the second run
Proportion of polar group contained: 0.09

d: Molar ratio of 2,3,3,3-tetrafluoropropene to VdF (2,3,3,3-tetrafluoropropene/VdF): 15.9/84.1

Mooney viscosity (ML1 + 10 (140°C)): 104
Glass transition temperature (Tg): -20°C
Heat of fusion: Not found in the second run
Proportion of polar group contained: 0.03

e: Molar ratio of 2,3,3,3-tetrafluoropropene to VdF (2,3,3,3-tetrafluoropropene/VdF): 35.9/64.1

Mooney viscosity (ML1 + 10 (140°C)): 52
Glass transition temperature (Tg): 0°C

Heat of fusion: Not found in the second run
Proportion of polar group contained: 0.06

f: Molar ratio of perfluoro-(2,9,9-trihaloid-5-trifluoromethyl-3,6-dioxa-8-heptene) (AEHF-1) to VdF (AEHF-1/VdF): 18.6/81.4

Mooney viscosity (ML1 + 10 (121°C)): 15
Glass transition temperature (Tg): -27°C
Heat of fusion: Not found in the second run
Proportion of polar group contained: Below detectable limit

g: Molar ratio of VdF to HFP: 77.9/22.1

Mooney viscosity (ML1 + 10 (140°C)): 77
Glass transition temperature (Tg): -18°C
Heat of fusion: Not found in the second run
Proportion of polar group contained: 0.05

The fluorine-containing copolymers were produced by the following methods.

Production Example 1 (fluorine-containing copolymer a)

1,500 ml of pure water, 0.3001 g of a 50% aqueous solution of $CH_2=CFCF_2OCF(CF_3)CF_2OCF(CF_3)COONH_4$, and 6.001 g of a 50% aqueous solution of $C_5F_{11}COONH_4$ were placed in a 3 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.22 MPa, and further a mixed solution monomer of VdF and 2,3,3,3-tetrafluoropropene at a molar ratio of 77.2/22.8 was injected under pressure to 1.501 MPa. 0.1 g of ammonium persulfate dissolved in 4 ml of pure water was injected under nitrogen pressure to start polymerization. When 11 g of a continuous monomer was reached, 1.6738 g of 1,1,1,2,3,3,3-heptafluoro-2-iodo-propane was added. When the pressure dropped to 1.44 MPa, the pressure was increased to 1.50 MPa with the continuous monomer. This operation was repeated, and after about 6.2 hours, when 521 g of the continuous monomer was fed, the autoclave was vented and cooled to recover 2,087 g of a dispersion. The solid content of the dispersion was 26.08 wt%. Calcium chloride was added to this dispersion to cause coagulation, and the resulting coagulated product was dried to obtain 524.3 g of a polymer. The obtained polymer contained 2,3,3,3-tetrafluoropropene and VdF at a molar ratio of 23.1/76.9. It was determined that the Mooney viscosity of the obtained polymer at 121°C was 25 and it was determined by DSC that the Tg was -13°C.

Production Example 2 (fluorine-containing copolymer b)

3,500 ml of pure water, 0.7004 g of a 50% aqueous solution of $CH_2=CFCF_2OCF(CF_3)CF_2OCF(CF_3)COONH_4$, and 14.002 g of a 50% aqueous solution of $C_5F_{11}COONH_4$ were placed in a 6 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.22 MPa, and further a mixed solution monomer of VdF and 2,3,3,3-tetrafluoropropene at a molar ratio of 78.4/21.6 was injected under pressure to 1.501 MPa. 0.24 ml of 2-methylbutane and 0.776 g of ammonium persulfate dissolved in 10 ml of pure water were injected under nitrogen pressure to start polymerization. A continuous monomer was supplied such that the pressure was retained at 1.5 MPa, and after 4.8 hours, when 400 g of the continuous monomer was fed, the autoclave was vented and cooled to recover 3,937 g of a dispersion. The solid content of the dispersion was 10.79 wt%. Aluminum sulfate was added to this dispersion to cause coagulation, and the resulting coagulated product was dried to obtain 423 g of a polymer. The obtained polymer contained 2,3,3,3-tetrafluoropropene and VdF at a molar ratio of 21.4/78.6. It was determined that the Mooney viscosity of the obtained polymer at 140°C was 65 and it was determined by DSC that the Tg was -13°C.

Production Example 3 (fluorine-containing copolymer c)

1,750 ml of pure water was placed in a 3 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.22 MPa, and further a mixed solution monomer of VdF and 2,3,3,3-tetrafluoropropene at a molar ratio of 78.0/22.0 was injected under pressure to 1.502 MPa. 5.25 g of ammonium persulfate

dissolved in 30 ml of pure water was injected under nitrogen pressure to start polymerization. A continuous monomer was supplied such that the pressure was retained at 1.5 MPa, and after 1.2 hours, when 400 g of the continuous monomer was fed, the autoclave was vented and cooled to recover 2,176 g of a dispersion. The solid content of the dispersion was 20.29 wt%. Aluminum sulfate was added to this dispersion to cause coagulation, and the resulting coagulated product was dried to obtain 440 g of a polymer. The obtained polymer contained 2,3,3,3-tetrafluoropropene and VdF at a molar ratio of 22.1/77.9. It was determined that the Mooney viscosity of the obtained polymer at 140°C was 37 and it was determined by DSC that the Tg was -13°C.

Production Example 4 (fluorine-containing copolymer d)

1,750 ml of pure water, 0.3503 g of a 50% aqueous solution of $CH_2$=$CFCF_2OCF(CF_3)CF_2OCF(CF_3)COONH_4$, and 7.003 g of a 50% aqueous solution of $C_5F_{11}COONH_4$ were placed in a 3 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.37 MPa, and further a mixed solution monomer of VdF and 2,3,3,3-tetrafluoropropene at a molar ratio of 84.5/15.5 was injected under pressure to 1.499 MPa. 0.12 ml of 2-methylbutane and 0.4165 g of ammonium persulfate dissolved in 10 ml of pure water were injected under nitrogen pressure to start polymerization. A continuous monomer was supplied such that the pressure was retained at 1.5 MPa, and after 5.6 hours, when 600 g of the continuous monomer was fed, the autoclave was vented and cooled to recover 2,336 g of a dispersion. The solid content of the dispersion was 26.62 wt%. Aluminum sulfate was added to this dispersion to cause coagulation, and the resulting coagulated product was dried to obtain 630 g of a polymer. The obtained polymer contained 2,3,3,3-tetrafluoropropene and VdF at a molar ratio of 15.9/84.1. It was determined that the Mooney viscosity of the obtained polymer at 140°C was 104 and it was determined by DSC that the Tg was -20°C.

Production Example 5 (fluorine-containing copolymer e)

1,750 ml of pure water, 0.3501 g of a 50% aqueous solution of $CH_2$=$CFCF_2OCF(CF_3)CF_2OCF(CF_3)COONH_4$, and 7.000 g of a 50% aqueous solution of $C_5F_{11}COONH_4$ were placed in a 3 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.09 MPa, and further a mixed solution monomer of VdF and 2,3,3,3-tetrafluoropropene at a molar ratio of 64.5/35.5 was injected under pressure to 1.503 MPa. 0.12 ml of 2-methylbutane and 0.4165 g of ammonium persulfate dissolved in 10 ml of pure water were injected under nitrogen pressure to start polymerization. A continuous monomer was supplied such that the pressure was retained at 1.5 MPa, and after 7.7 hours, when 600 g of the continuous monomer was fed, the autoclave was vented and cooled to recover 2,378 g of a dispersion. The solid content of the dispersion was 26.77 wt%. Aluminum sulfate was added to this dispersion to cause coagulation, and the resulting coagulated product was dried to obtain 630 g of a polymer. The obtained polymer contained 2,3,3,3-tetrafluoropropene and VdF at a molar ratio of 35.9/64.1. It was determined that the Mooney viscosity of the obtained polymer at 140°C was 52 and it was determined by DSC that the Tg was 0°C.

Production Example 6 (fluorine-containing copolymer f)

2,400 ml of pure water and 600 g of a 50% by mass aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 600 rpm, 25 g of perfluoro-(2,9,9-trihaloid-5-trifluoromethyl-3,6-dioxa-8-heptene) (AEHF-1) was injected under pressure, and VdF was injected under pressure to 2.01 MPa. 0.09 g of ammonium persulfate dissolved in 5 ml of pure water was injected under nitrogen pressure into the above mixture. When the pressure dropped to 1.98 MPa, 5 g of VdF and 6.363 g of AEHF-1 were fed. This operation was repeated, and after about 20 minutes, when 5 g of VdF was fed, 0.609 g of 1,4-diiodoperfluorobutane and 2 g of water for pushing were injected under nitrogen pressure. Further, after 130 minutes, when 135 g of VdF and 165.438 g of AEHF-1 were fed, the autoclave was vented and cooled to recover 3,317 g of a dispersion. The solid content of the dispersion was 10.77% by mass (amount of polymer of 357 g). Aluminum sulfate was added to this dispersion to cause coagulation, and the resulting coagulated product was dried to obtain 350.2 g of an elastomer. The obtained elastomer contained VdF and AEHF-1 at a molar ratio of 81.4/18.6. It was determined that the Mooney viscosity of the obtained polymer at 121°C was 15 and it was determined by DSC that the Tg was -27°C.

Production Example 7 (fluorine-containing copolymer g)

1,650 ml of pure water was placed in a 3 L stainless steel autoclave, the autoclave was purged with nitrogen and slightly pressurized with hexafluoropropylene (HFP), the temperature thereof was adjusted to 80°C while stirring at

380 rpm, HFP was injected under pressure to 0.23 MPa, and further a mixed solution monomer of vinylidene fluoride (VdF) and HFP at a molar ratio of 78.2/21.8 was injected under pressure to 1.472 MPa. 0.097 cc of 2-methylbutane was injected under nitrogen pressure, and 36.4 g of ammonium persulfate dissolved in 80 ml of pure water was injected under nitrogen pressure to start polymerization. When the pressure dropped to 1.44 MPa, the pressure was increased to 1.50 MPa with a continuous monomer. This operation was repeated, and after about 9.3 hours, when 607 g of the continuous monomer was fed, the autoclave was vented and cooled to recover 2,299 g of a dispersion. The solid content of the dispersion was 26.9 wt%. Magnesium chloride was added to this dispersion to cause coagulation, and the resulting coagulated product was dried to obtain 610 g of a polymer. The obtained polymer contained HFP and VdF at a molar ratio of 22.1/77.9. It was determined that the Mooney viscosity (ML1 + 10 (140°C)) of the obtained polymer was 77 and it was determined by DSC that the Tg was -18°C. In addition, no heat of fusion was found in the second run.

PVdF

A: VdF homopolymer

Weight average molecular weight of 900,000
Storage elastic modulus at 30°C of 1,740 MPa
Storage elastic modulus at 60°C of 1,140 MPa
Melting point of 171°C

B: VdF homopolymer

Weight average molecular weight of 1,800,000
Storage elastic modulus at 30°C of 1,820 MPa
Storage elastic modulus at 60°C of 1,180 MPa
Melting point of 171°C

C: PVdF containing acrylic acid unit

Content of acrylic acid unit of 1.0 mol%
Weight average molecular weight of 1,100,000
Storage elastic modulus at 30°C of 1,280 MPa
Storage elastic modulus at 60°C of 720 MPa
Melting point of 161°C

D: PVdF containing maleic acid unit

Content of maleic acid unit of 0.5 mol%
Weight average molecular weight of 900,000
Storage elastic modulus at 30°C of 1,260 MPa
Storage elastic modulus at 60°C of 760 MPa
Melting point of 167°C

E: PVdF containing CTFE unit

Content of CTFE unit of 2.4 mol%
Weight average molecular weight of 800,000
Storage elastic modulus at 30°C of 1,250 MPa
Storage elastic modulus at 60°C of 880 MPa
Melting point of 168°C

F: PVdF containing HFP unit and acrylic acid unit

VdF/HFP = 97.5/2.5 (mol%)
Content of acrylic acid unit of 1.0 mol%
Weight average molecular weight of 1,110,000

Storage elastic modulus at 30°C of 1,080 MPa
Storage elastic modulus at 60°C of 750 MPa
Melting point of 150°C

G: PVdF containing 3-butenoic acid unit

Content of 3-butenoic acid unit of 1.0 mol%
Weight average molecular weight of 1,000,000
Storage elastic modulus at 30°C of 1,230 MPa
Storage elastic modulus at 60°C of 730 MPa
Melting point of 163°C

Examples 1 to 21 and Comparative Examples 1 to 5

(Preparation of binder solution)

A fluorine-containing copolymer and a PVdF were dissolved in N-methyl-2-pyrrolidone (NMP) such that the concentration of the binder (fluorine-containing copolymer and PVdF) in the NMP solution was 15% by mass, with a formulation (mass ratio) shown in Table 1, to prepare a composition containing a fluorine-containing copolymer (binder solution).

(Preparation of positive electrode mixture)

A positive electrode active material (NMC622 ($LiNi_{0.6}Mn_{0.2}Co_{0.2}O_2$) or NMC811 ($LiNi_{0.8}Mn_{0.1}Co_{0.1}O_2$)) and a conductive agent (ketjen black (SuperP Li, manufactured by TIMCAL)) were added to the composition obtained above, and these were sufficiently mixed using a stirrer to prepare a positive electrode mixture. The mass ratio of the positive electrode active material, the conductive agent, and the binder in the positive electrode mixture was 97/1.5/1.5. In addition, the solid concentration of the positive electrode mixture was 75% by mass. For the evaluation of gelation resistance (measurement of viscosity change rate), a positive electrode mixture containing NMC811 as a positive electrode active material was used. For the other evaluations, a positive electrode mixture containing NMC622 as a positive electrode active material was used.

(Creation of positive electrode including positive electrode material layer on one side)

The obtained positive electrode mixture was uniformly applied to one side of a positive electrode current collector (aluminum foil having a thickness of 20 μm) such that the coating mass was 22.5 mg/cm$^2$, and NMP was completely volatilized, then the positive electrode current collector was pressed using a roll press by applying a pressure of 10 tons to create a positive electrode including a positive electrode material layer and the positive electrode current collector.

(Creation of positive electrode including positive electrode material layer on each of both sides)

The obtained positive electrode mixture was uniformly applied to both sides of a positive electrode current collector (aluminum foil having a thickness of 20 μm) such that the coating mass was 30.0 mg/cm$^2$, and NMP was completely volatilized, then the positive electrode current collector was pressed using a roll press by applying a pressure of 6 tons to create a positive electrode including a positive electrode material layer and the positive electrode current collector.

The positive electrode mixture and evaluation results of the electrode are shown in Table 1.

Examples 22 to 26 and Comparative Examples 6 to 8

Lithium ion secondary batteries were created by the method described above using the electrodes having a positive electrode material layer on one side created in Examples 5, 11, 13, 14, 16 and Comparative Examples 1, 2, and 4.

Evaluation results of the batteries are shown in Table 2.

Example 27

9.5% by mass of a graphite-coated film silicon oxide powder (powder in which the surface of silicon oxide was

coated with graphite) and 85.5% by mass of a graphite powder as negative electrode active materials, and 5% by mass (15% NMP solution) of the fluorine-containing copolymer c as a binder were mixed, and an appropriate amount of NMP was further added to prepare a negative electrode mixture slurry. Next, this negative electrode mixture slurry was applied to one or both sides of a negative electrode current collector made of copper foil, and this was dried. This was cut off to a predetermined electrode size and rolled using a roll press to create a negative electrode having a negative electrode material layer formed on one side or each of both sides of a negative electrode current collector. Evaluation results are shown in Table 3.

Example 28

A negative electrode was created by the same operation as in Example 27 except that 47.5% by mass of a graphite-coated film silicon oxide powder and 47.5% by mass of a graphite powder were used as negative electrode active materials. Evaluation results are shown in Table 3.

Comparative Examples 9 and 11

Negative electrodes were created by the same operation as in Example 27 except that polyacrylic acid (manufactured by Aldrich, weight average molecular weight of 450,000) or styrene-butadiene elastomer (manufactured by JSR Corporation, TRD2001) was used as a binder. Evaluation results are shown in Table 3.

Comparative Examples 10 and 12

Negative electrodes were created by the same operation as in Example 28 except that polyacrylic acid (manufactured by Aldrich, weight average molecular weight of 450,000) or styrene-butadiene elastomer (manufactured by JSR Corporation, TRD2001) was used as a binder. Evaluation results are shown in Table 3.

Example 29

A negative electrode was created by the same operation as in Example 27 except that a silicon powder was used instead of the graphite-coated film silicon oxide powder. Evaluation results are shown in Table 4.

Example 30

A negative electrode was created by the same operation as in Example 29 except that 47.5% by mass of a silicon powder and 47.5% by mass of a graphite powder were used as negative electrode active materials. Evaluation results are shown in Table 4.

Comparative Examples 13 and 15

Negative electrodes were created by the same operation as in Example 29 except that polyacrylic acid (manufactured by Aldrich, weight average molecular weight of 450,000) or styrene-butadiene elastomer (manufactured by JSR Corporation, TRD2001) was used as a binder. Evaluation results are shown in Table 4.

Comparative Examples 14 and 16

Negative electrodes were created by the same operation as in Example 30 except that polyacrylic acid (manufactured by Aldrich, weight average molecular weight of 450,000) or styrene-butadiene elastomer (manufactured by JSR Corporation, TRD2001) was used as a binder. Evaluation results are shown in Table 4.

[Table 1-1]

Table 1-1

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Binder | PVdF | A | | | | | 80 | 80 | | | | | | | |
| | | B | | | | | | | 8 | 50 | 80 | 92 | 70 | 80 | |
| | | C | | | | | | | | | | | | | 80 |
| | | D | | | | | | | | | | | | | |
| | | E | | | | | | | | | | | | | |
| | | F | | | | | | | | | | | | | |
| | | G | | | | | | | | | | | | | |
| | Fluorine-containing copolymer | a | | | | | 20 | | | | | | | | 20 |
| | | b | | | | | | 20 | | | | a | | | |
| | | a | 100 | | | | | | 92 | 50 | 20 | | | | |
| | | d | | 100 | | | | | | | | | | | |
| | | e | | | 100 | | | | | | | | 30 | | |
| | | f | | | | 100 | | | | | | | | 20 | |
| | | g | | | | | | | | | | | | | |
| Viscosity change rate (%) | | | 115 | 128 | 106 | 130 | 121 | 118 | 118 | 121 | 127 | 139 | 119 | 134 | 117 |
| Peel strength (N/cm) | | | 0.31 | 0.33 | 0.29 | 0.32 | 0.32 | 0.28 | 0.34 | 0.31 | 0.28 | 0.37 | 0.36 | 0.35 | 0.46 |
| Maximum test force (N) | | | 0.8 | 0.9 | 0.7 | 0.9 | 1.1 | 1.1 | 0.8 | 10 | 1.1 | 12 | 1.1 | 1.1 | 1.1 |
| Maximum bending diameter (mm) | | | 1 | 1 | 1 | 1 | 2 | 2 | 1 | 1 | 1 | 2 | 1 | 1 | 1 |
| Springback rate (%) | | | 102 | 102 | 101 | 102 | 101 | 101 | 102 | 102 | 101 | 102 | 101 | 101 | 101 |
| Electrolytic solution sweilling rate (%) | | | 106 | 105 | 105 | 105 | 103 | 104 | 105 | 105 | 104 | 104 | 105 | 104 | 104 |

[Table 1-2]

Table 1-2

| | | | Example 14 | Example 15 | Example 16 | Example 17 | Example 18 | Example 19 | Example 20 | Example 21 | Comparative Example 1 | Comparative Example 2 | Comparative Example 3 | Comparative Example 4 | Comparative Example 5 |
|---|---|---|---|---|---|---|---|---|---|---|---|---|---|---|---|
| Binder | PVDF | A | | | | | | | | | | | | | |
| | | B | | | | | | | | | 100 | | | | |
| | | C | 80 | 90 | 80 | 60 | | | | | | 100 | | 80 | |
| | | D | | | | | 70 | | | | | | | | |
| | | E | | | | | | 50 | | | | | 100 | | |
| | | F | | | | | | | 30 | | | | | | |
| | | G | | | | | | | | 80 | | | | | |
| | Fluorine-contaning copolymer | a | | | | | | | | | | | | | |
| | | b | 20 | 10 | | | | | | | | | | | |
| | | c | | | 20 | | | | 70 | | | | | | |
| | | d | | | | | | 50 | | | | | | | |
| | | e | | | | | 30 | | | 20 | | | | | |
| | | f | | | | 40 | | | | | | | | | |
| | | g | | | | | | | | | | | | 20 | 100 |
| Viscosity change rate (%) | | | 121 | 139 | 112 | 125 | 121 | 108 | 129 | 133 | >300 | >300 | 146 | >300 | <60 |
| Peet strength (Nfcm) | | | 0.56 | 0.55 | 0.58 | 0.53 | 0.49 | 0.19 | 0.44 | 0.35 | 0.14 | 0.61 | 0.11 | 0.19 | 0.05 |
| Maximum test force (N) | | | 1.1 | 1.2 | 11 | 1.0 | 1.1 | 0.9 | 0.9 | 1.1 | 1.4 | 1.3 | 1.1 | 1.4 | 1.0 |
| Maximum bending diameter (mm) | | | 1 | 2 | 1 | 1 | 1 | 1 | 1 | 1 | 4 | 3 | 3 | 4 | 2 |
| Springback rate (%) | | | 101 | 101 | 101 | 101 | 101 | 100 | 101 | 101 | 101 | 100 | 102 | 104 | 106 |
| Electrolytic solution swelling rate (%) | | | 104 | 103 | 104 | 104 | 105 | 105 | 105 | 104 | 103 | 103 | 104 | 110 | 112 |

[Table 2]

Table 2

| | | | Example 22 | Example 23 | Example 24 | Example 29 | Example 26 | Comparative Example 6 | Comparative Example 7 | Comparative Example 8 |
|---|---|---|---|---|---|---|---|---|---|---|
| Binder | PVdF | A | 80 | | | | | | | |
| | | B | | 70 | | | | 100 | | |
| | | C | | | 80 | 80 | 80 | | 100 | 80 |
| | | D | | | | | | | | |
| | | E | | | | | | | | |
| | | F | | | | | | | | |
| | | G | | | | | | | | |
| | Fluorine-containing copolymer | a | 20 | | 20 | | | | | |
| | | b | | | | 20 | | | | |
| | | c | | | | | 20 | | | |
| | | d | | | | | | | | |
| | | e | | 30 | | | | | | |
| | | f | | | | | | | | |
| | | g | | | | | | | | 20 |
| Initial resistance (Ω) | | | 3.5 | 2.8 | 3.5 | 2.7 | 2.5 | 3.4 | 3.7 | 8.4 |
| Initial discharge capacity (mAh) | | | 121 | 124 | 123 | 125 | 125 | 122 | 118 | 88 |
| Cycle capacity retention rate (%) | | | 72.3 | 73.8 | 72.8 | 73.4 | 75.0 | 73.4 | 70.8 | 58.4 |
| Resistance increase rate (%) | | | 184 | 176 | 186 | 178 | 168 | 178 | 189 | 267 |

[Table 3]

Table 3

| | Example 27 | Example 28 | Comparative Example 9 | Comparative Example 10 | Comparative Example 11 | Comparative Example 12 |
|---|---|---|---|---|---|---|
| Binder | Fluorine-containing copolymer c | Fluorine-containing copolymer c | Polyacrylic acid | Polyacrylic add | Styrene-butadiene elastomer | Styrene-butadiene elastomer |
| Graphite powder/ graphite-ooatedfilm silicon oxide powder (mass ratio) | 90/10 | 50/50 | 90/10 | 50/50 | 90/10 | 50/50 |
| Maximum test force (N) | 0.13 | 0.15 | 0.21 | 0.25 | 0.17 | 0.19 |
| Cycle capacity retention rate (%) | 87.3 | 72.3 | 78.6 | 24.1 | 68.1 | <10 |
| Resistance increase rate (%) | 157 | 243 | 215 | >500 | 277 | >500 |

[Table 4]

Table **4**

| | Example 29 | Example 30 | Comparative Example 13 | Comparative Example 14 | Comparative Example 15 | Comparative Example 16 |
|---|---|---|---|---|---|---|
| Binder | Fluorine-containing copolymer c | Fluorine-containing copolymer c | Polyacrylic acid | Polyocrylic acid | Styrene-butadiene elastomer | Styrene-butadiene elastomer |
| Graphite powder/ slicon powder (mass ratio) | 90/10 | 50/50 | 90110 | 50/50 | 90/10 | 50/50 |
| Maximum test force (N) | 0.15 | 0.16 | 0.26 | 0.31 | 0.19 | 0.21 |
| Cycle capacity retention rate (%) | 68 | 34 | 37 | | <10 | |
| Resistance increase rate (%) | 351 | 452 | 433 | >500 | >500 | >500 |

## Claims

1. A binder for a battery, comprising a fluorine-containing copolymer, wherein
the fluorine-containing copolymer comprises a repeating unit (a) based on vinylidene fluoride and at least one repeating unit (b) selected from the group consisting of a repeating unit (b1) represented by a general formula (b1) and a repeating unit (b2) represented by a general formula (b2), and the fluorine-containing copolymer has a molar ratio of the repeating unit (a) to the repeating unit (b), (a)/(b), of 95/5 to 5/95:

General formula (b1):

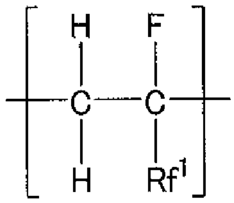

wherein $Rf^1$ is a linear or branched fluorinated alkyl group or fluorinated alkoxy group having 1 to 12 carbon atoms, and, when the number of carbon atoms is 2 or more, optionally includes an oxygen atom between carbon atoms thereof,

General formula (b2):

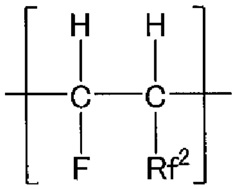

wherein $Rf^2$ is a linear or branched fluorinated alkyl group or fluorinated alkoxy group having 1 to 12 carbon atoms, and, when the number of carbon atoms is 2 or more, optionally includes an oxygen atom between carbon atoms thereof.

2. The binder for a battery according to claim 1, wherein the fluorine-containing copolymer has a molar ratio of the repeating unit (a) to the repeating unit (b), (a)/(b), of 87/13 to 20/80.

3. The binder for a battery according to claim 1 or 2, wherein a glass transition temperature of the fluorine-containing copolymer is 25°C or less.

4. The binder for a battery according to any one of claims 1 to 3, wherein the binder for a battery further comprises a polyvinylidene fluoride.

5. The binder for a battery according to claim 4, wherein a mass ratio of the fluorine-containing copolymer to the polyvinylidene fluoride, fluorine-containing copolymer/polyvinylidene fluoride, is 99/1 to 1/99.

6. An electrode mixture comprising the binder for a battery according to any one of claims 1 to 5, a powder electrode material, and water or a non-aqueous solvent.

7. The electrode mixture according to claim 6, wherein the powder electrode material comprises a lithium transition metal composite oxide.

8. The electrode mixture according to claim 6 or 7, wherein the electrode mixture comprises the non-aqueous solvent and the non-aqueous solvent comprises N-methyl-2-pyrrolidone.

9. An electrode comprising an electrode material layer comprising the binder for a battery according to any of claims 1 to 5.

10. An electrode comprising an electrode material layer formed of the electrode mixture according to any of claims 6 to 8.

11. A secondary battery comprising the electrode according to claim 9 or 10.

## INTERNATIONAL SEARCH REPORT

International application No.
**PCT/JP2021/030593**

**A. CLASSIFICATION OF SUBJECT MATTER**

***C08F 214/22***(2006.01)i; ***C08L 27/16***(2006.01)i; ***H01M 4/131***(2010.01)i; ***H01M 4/62***(2006.01)i
FI: H01M4/62 Z; H01M4/131; C08F214/22; C08L27/16

According to International Patent Classification (IPC) or to both national classification and IPC

**B. FIELDS SEARCHED**

Minimum documentation searched (classification system followed by classification symbols)

C08F214/22; C08L27/16; H01M4/131; H01M4/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2019/087652 A1 (DAIKIN INDUSTRIES, LTD) 09 May 2019 (2019-05-09) paragraphs [0087], [0094], [0121]-[0127], [0134], [0158] | 1-2, 4-11<br>3 |
| X | WO 2020/080523 A1 (DAIKIN IND LTD) 23 April 2020 (2020-04-23) claims, paragraph [0122] | 1-3, 6-11 |
| Y | JP 2012-184201 A (NIPPON ZEON CO LTD) 27 September 2012 (2012-09-27) paragraph [0039] | 3 |
| A | WO 2016/076371 A1 (ASAHI GLASS CO LTD) 19 May 2016 (2016-05-19) entire text, all drawings | 1-11 |
| A | WO 2016/148304 A1 (ZEON CORP) 22 September 2016 (2016-09-22) entire text, all drawings | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2021** | **12 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/030593**

| Patent document cited in search report | Publication date (day/month/year) | Patent family member(s) | Publication date (day/month/year) |
|---|---|---|---|
| WO 2019/087652 A1 | 09 May 2019 | US 2020/0243862 A1<br>paragraphs [0136], [0148], [0192]-[0204], [0213], [0241]<br>EP 3680969 A<br>CN 111194495 A<br>KR 10-2020-0079516 A | |
| WO 2020/080523 A1 | 23 April 2020 | (Family: none) | |
| JP 2012-184201 A | 27 September 2012 | (Family: none) | |
| WO 2016/076371 A1 | 19 May 2016 | (Family: none) | |
| WO 2016/148304 A1 | 22 September 2016 | KR 10-2017-0108164 A<br>entire text, all drawings<br>CN 107408672 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011002097 A
- JP 2013216915 A